# EUROPEAN PATENT SPECIFICATION

(11) **EP 3 619 722 B1**
(45) Date of publication and mention of the grant of the patent: **23.10.2024**
(21) Application number: 18738390.6
(22) Date of filing: 04.05.2018
(51) Int. Cl.: G21C 1/20, G21C 5/02, G21C 15/06, C09K 5/08, G21C 3/322, G21C 15/18, G21D 1/04

(54) **GAS-COOLED PRESSURE TUBE REACTOR**
GASGEKÜHLTER DRUCKROHRREAKTOR
RÉACTEUR À TUBES DE FORCE REFROIDI AU GAZ

(30) Priority: 05.05.2017 US 201762501833 P
(43) Date of publication of application: 11.03.2020
(73) Proprietor: TerraPower, LLC, Bellevue, WA 98008 (US)
(72) Inventor: CHEATHAM, Jesse R. III, Bellevue, WA 98008 (US); COHEN, Michael E., Bellevue, WA 98008 (US); JOHNSON, Brian C., Bellevue, WA 98008 (US); PETROSKI, Robert C., Bellevue, WA 98008 (US); TOURAN, Nicholas W., Bellevue, WA 98008 (US); TRUONG, Bao H., Bellevue, WA 98008 (US)
(74) Representative: D Young & Co LLP
(86) International application number: PCT/US2018/031208
(87) International publication number: WO 2018/204857

(56) References cited:
- WO-A1-97/41565
- GB-A- 849 308
- GB-A- 868 318
- US-A- 3 444 038
- US-A1- 2013 089 174
- US-A1- 2015 155 060
- US-A1- 2016 348 539

## Description

### INTRODUCTION

The majority of nuclear reactors in use today are liquid-cooled reactors such as pressurized water reactors (PWRs). Gas-cooled reactor designs are also known. However, gas-cooled reactor designs have not been as well received for commercial power generation. Because gases in general are less efficient at removing heat from a reactor core, the technical tradeoffs of using a gaseous coolant make the gas-cooled designs less economical when compared to liquid-cooled reactor designs.

GB849308 discloses high pressure gas cooled liquid moderated nuclear reactors comprising a moderator containment tank pierced by a plurality of tubes containing fuel elements cooled by the flow of pressurised gas in a coolant circuit including the tubes. US 2015/155060 discloses a nuclear fuel bundle including a first end face and a second end face axially spaced apart from the first end face and a plurality of elongate nuclear fuel elements supported by at least one spacer. WO 97/41565 discloses a fuel bundle design for a heavy water moderated and cooled reactor. US 2016/348539 discloses a method for operating a closed loop regenerative thermodynamic power generation cycle system. GB 868318 discloses improvements in nuclear reactors in which the coolant is gaseous and the moderator is heavy water. US 2013/0089174 discloses a pressure-tube nuclear reactor including an outer shell having an interior to contain a moderator at a first pressure and a coolant plenum to receive the coolant fluid at a second pressure. US 3444038 discloses nuclear power station with carbon dioxide cooling system for producing electrical energy.

### SUMMARY OF INVENTION

The subject matter for which protection is sought is defined by the independent claims. Further preferred embodiments are defined in the dependent claims.

### BRIEF DESCRIPTION OF DRAWINGS

Various aspects of at least one example are discussed below with reference to the accompanying figures, which are not intended to be drawn to scale. The figures are included to provide an illustration and a further understanding of the various aspects and examples and are incorporated in and constitute a part of this specification, but are not intended as a definition of the limits of a particular example. The drawings, together with the remainder of the specification, serve to explain principles and operations of the described and claimed aspects and examples. In the figures, each identical or nearly identical component that is illustrated in various figures is represented by a like numeral. For purposes of clarity, not every component may be labeled in every figure.
FIG. 1 illustrates an embodiment of a gas-cooled pressure tube nuclear reactor (GPTR) identifying some of the primary components of the design.
FIGS. 2A-2C illustrate embodiments of a reactor core designed for use in a GPTR such as that discussed with reference to FIG. 1.
FIG. 3 illustrates an alternative embodiment of a reactor core designed for use in a GPTR such as that discussed with reference to FIG. 1.
FIG. 4 illustrates yet another alternative embodiment of a reactor core designed for use in a GPTR having vertically oriented fuel columns.
FIG. 5 illustrates a cross-sectional view of an embodiment of a nuclear fuel insert suitable for use in a fuel column.
FIG. 6 illustrates a cross-sectional view of an alternative embodiment of a nuclear fuel insert suitable for use in a fuel column.
FIG. 7 illustrates a cross-sectional view of yet another embodiment of a nuclear fuel insert suitable for use in a fuel column.
FIGS. 8A and 8B illustrate cross-sectional views of an embodiment of nuclear fuel inserts that incorporate a gas gap for use in a fuel column.
FIG. 9 illustrates a cross-sectional view of an alternative embodiment of a nuclear fuel insert incorporating a stand-off structure suitable for use in a fuel column.
FIG. 10 illustrates a cross-sectional view of a pressure tube suitable for use as the exterior pressure-boundary of a fuel column.
FIG. 11 shows a detailed cross-sectional view of the interface between a nuclear fuel insert and a pressure tube.
FIGS. 12A and 12B are provided to illustrate the thermal performance of an embodiment of a fuel column in a reactor core during a loss of coolant (LOC) event.
FIG. 13 illustrates a cross-sectional view of an alternative embodiment of a fuel column designed to receive cooled gas coolant and remove heated gas coolant from the same end of the fuel column such as may be used with the reactor core illustrated in FIG. 3.
FIG. 14 illustrates a cross-sectional view of yet another alternative embodiment of a fuel column provided with a moderator around the outside of the fuel column.
FIG. 15 illustrates a schematic of an embodiment of a split-expansion modified Brayton cycle incorporating a GPTR.
FIG. 16 illustrates a schematic of an embodiment of a pre-expansion modified Brayton cycle incorporating a GPTR.
FIG. 17 illustrates an alternative schematic of an embodiment of a split-expansion modified Brayton cycle incorporating a GPTR.
FIG. 18 illustrates yet another alternative schematic of an embodiment of a split-expansion modified Brayton cycle incorporating a GPTR.

### DETAILED DESCRIPTION

This disclosure describes various configurations and components of a gas-cooled pressure tube nuclear reactor (GPTR). For the purposes of this application, embodiments of a GPTR that use a uranium fuel will be described. However, it will be understood that any type of nuclear fuel, now known or later developed, may be used and that the technologies described herein may be equally applicable regardless of the type of fuel used. Note that the minimum and maximum operational temperatures of fuel within a reactor may vary depending on the fuel used.

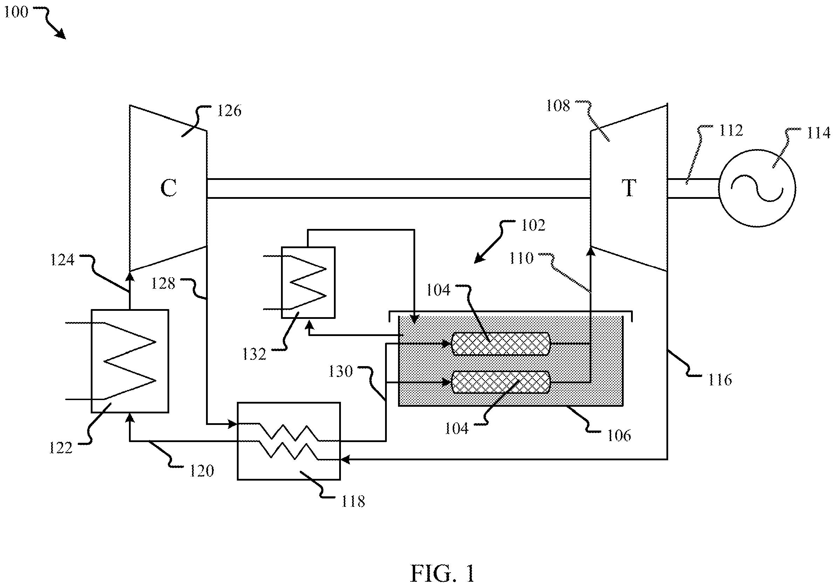

FIG. 1 illustrates an embodiment of a GPTR identifying some of the primary components of the design. In the GPTR 100 shown, a gas coolant, that is a coolant that is gaseous under room temperature and pressure, is used to remove heat generated by fission from the nuclear reactor 102. The heat is then converted into mechanical work using a turbine 108 and the mechanical work is used to generate electricity.

In the embodiment shown, the nuclear reactor 102 includes some number (two are shown) of fuel columns 104 in the form of pressurized tubes containing some amount of nuclear fuel. The fuel columns 104 are arranged to bring enough fuel into proximity to achieve criticality and generate heat from the fission of the fuel. The generated heat is removed by the flow of gas coolant, which is the working fluid when in normal operation.

The fuel columns 104 are submerged in a pool of liquid moderator contained in a vessel called a calandria 106. In some embodiments, the liquid moderator in the calandria 106 is water maintained at a relatively low pressure (e.g., less than 10 atm) and a relatively low temperature (e.g., less than 90 °C). Other options for moderator fluid include mixtures of ammonia and organic fluids, such as biphenyl and terphenyl mixtures, Monsanto's various Santowax brand products (Santowax-R, Santowax-OM, etc.), and Monsanto's OS-84 (a mixture of terphenyls treated catalytically with hydrogen to produce 40 percent saturated hydrocarbons). For example, in an embodiment, the water is maintained at from 65-75 °C and 1-2 atm. Depending on the embodiment, the water further may be heavy water (i.e., deuterium oxide), normal or "light" water (i.e., protium oxide), or a mix of both depending on the amount of moderation desired. Note that the liquid moderator may also provide some cooling of the fuel column 104. However, the term "liquid moderator" or, simply, "moderator" will generally be used instead of "liquid coolant" to distinguish the moderating calandria liquid from the gas coolant. Likewise, the term "calandria" 106 is used herein to distinguish the vessel from a high pressure reactor vessel commonly found in pressurized water reactors in which the water may exceed 100 atm in pressure. The calandria 106 and the liquid moderator are discussed in greater detail below.

Control rods (not shown) may also be provided as is known in the art for additional moderation and control of the reactivity of the reactor 102. In an embodiment, the reactor may be shut down via movement of the control rods into and out of the calandria 106. For example, in an embodiment during an emergency control rods may be automatically inserted into the calandria 106 thus bringing the reactor subcritical.

As mentioned above, a fuel column 104 includes an exterior structural tube containing some amount of nuclear fuel in which the structural tube is capable of holding gas pressurized up to the operating gas pressure. In an embodiment, the pressurized tube is provided with an inlet for receiving the gas coolant and an outlet for discharging the gas coolant, thus allowing coolant to be flowed through the interior of the tube and, thus, to remove heat from the nuclear fuel. During normal operation the gas coolant provides most, if not all, heat removal and, thus, temperature control of the fuel.

In an embodiment, the fuel columns 104 may be designed to also allow the fuel to be removed from the column 104. Depending on the embodiment, the nuclear fuel in the fuel columns 104 may be in any solid form and any geometry. For example, in an embodiment the fuel column 104 may be filled with nuclear fuel particulates or pellets. Forms and geometries that provide good thermal contact between the fuel and the gas coolant may be particularly advantageous. In addition, supercritical fluid coolants may also be advantageous because of their improved ability to penetrate porous structures. Several embodiments of nuclear fuel inserts suitable for use in fuel columns 104 are discussed in greater detail below.

As illustrated in FIG. 1, a heated coolant stream 110 exits the fuel columns 104 and is passed to a turbine 108. In an embodiment, for example, the coolant is supercritical carbon dioxide maintained at a pressure from 7.1-30 MPa and at a temperature from as low as 325 °C to as high as 700 °C such as from 325-500 °C and from 500-700 °C. The high pressure of the heated coolant stream 110 is used to drive the turbine 108 converting the potential and/or thermal energy of the coolant into mechanical rotational energy. In the embodiment shown, the turbine 108 is connected by a shaft 112 to a generator 114, which in turn converts the mechanical energy into electricity.

After driving the turbine 108, the coolant is discharged at a lower temperature and pressure as a depressurized coolant stream 116. In the embodiment shown, this stream 116 is passed through heat exchanger 118 which cools the coolant. Heat exchanger 118 may be considered a recuperator as the coolant stream 116 from the turbine 108 is transferring heat to the coolant stream 128 from the compressor 126 prior to its return to the reactor 102. The cooled stream 120 discharged by the heat exchanger 118 may be further cooled by passing it through a cooler 122. In an embodiment, the cooler 122 may simply be a second heat exchanger that cools the coolant using chilled air or water from an external source. Except were explicitly discussed otherwise, heat exchangers will be generally presented in this disclosure in terms of simple, single pass, shell-and-tube heat exchangers having a set of tubes and with tube sheets at either end. However, it will be understood that, in general, any design of heat exchanger may be used, although some designs may be more suitable than others. For example, in addition to shell and tube heat exchangers, plate, plate and shell, printed circuit, and plate fin heat exchangers may be suitable.

The coolant of the cooled output stream 124 from cooler 122 is then delivered to a compressor 126 where it is repressurized to at or near the operating pressure of the fuel columns. In the embodiment shown, the pressurized coolant stream 128 discharged by the compressor 126 is preheated by the heat exchanger 118 before it is returned 130 to the reactor 102 to flow through the fuel columns 104 and reheated to the exit temperature and pressure.

In the GPTR 100, the energy in the form of heat removed from the nuclear reactor 102 is converted into mechanical work via a thermodynamic cycle whose working fluid (the coolant) is used directly as the coolant for a nuclear reactor core. In the embodiment of the GPTR 100 illustrated, the thermodynamic cycle is a simple recuperated Brayton cycle that involves compressing the working fluid, adding heat to the compressed fluid, expanding the working fluid to generate the mechanical work and cooling the fluid before repeating the cycle. However, the simple recuperated Brayton cycle is but one thermodynamic cycle that may be used to convert heat into mechanical work and any cycle, now known or later developed, may be adapted for use in a GPTR.

For instance, in the embodiment shown the compressor 126 is driven by the same shaft 112, thus receiving its mechanical energy directly from the turbine 108. This is but one example of how the turbine and compressor power cycle may be effected. Other embodiments using different power cycles with different turbine and compressor configurations to convert the energy in the form of high pressure and temperature of the coolant into mechanical energy are discussed below and in the attachments. For example, many different variation of the Brayton cycle have been recently developed each with differing performance attributes that, depending on the operating conditions of a GPTR, may be more or less suited for use in a GPTR. These include the pre-compression modified Brayton cycle, the recompression modified Brayton cycle, the split-expansion modified Brayton cycle, and the partial cooling modified Brayton cycle. Other thermodynamic cycles that could be adapted to use with coolants are also feasible.

Many gases may be used in GPTR embodiments as a reactor coolant. Preferably, gases that are well-understood in the art and whose properties and material interactions have been fully characterized may be used advantageously in various embodiments. Examples of such gases may include, but are not limited to, carbon dioxide (CO₂), nitrogen (N₂), helium, enriched nitrogen (that is, nitrogen in which the isotopic balance is shifted by enriching nitrogen gas, which typically comprises almost 100% ¹⁴N, with ¹⁵N, to reduce generation of ¹⁴C within the core), neon, argon, or mixtures of such gases. In some embodiments, it may be preferable to use gases that deviate more from ideal-gas behavior, thereby allowing exploitation of the thermodynamic characteristics of such gases (in particular, by using supercritical gases).

In the embodiment 100 shown, supercritical CO₂ (sCO₂) is the coolant and the CO₂ is maintained in a supercritical state throughout the closed-loop coolant circuit formed by the turbine 108, compressor 126, GPTR 102 and heat exchangers 118, 120. In an alternative embodiment, a condensing sCO₂ cycle is used in which CO₂ is liquefied in a cooler/condenser when its pressure is below the critical point. The properties of sCO₂ may provide efficiency and simplified plant design when used in a direct power cycle with a pressure tube core. Some advantages of this approach include a high thermodynamic efficiency attainable with sCO₂ as a working fluid in more moderate temperature ranges than other possible choices such as helium and argon. The ability to use sCO₂ efficiently in a cycle peak temperature range possibly between 300 °C and 600 °C permits a wide range of materials and fuels to be used in the fuel columns 104, allowing reduced materials costs and enhanced materials durability. More moderate operating temperatures of sCO₂ may also greatly reduce plant size, as less infrastructural mass is needed to absorb dangerous reactor heat in the event of primary coolant loss. At the working pressures and temperatures mentioned, sCO₂ allows the direct power and cooling cycle to be very compact and with reduced pressure losses as the fluid has a high density. This further improves the economics of the GPTR.

The stability of sCO₂ as a working fluid across a relatively wide range of temperatures and pressures also leads to a great increase in efficiency during the compression phase of direct gas-cooled reactor designs. When analyzed in a Brayton cycle setting, ideal gas cycles such as one using helium show a linear relationship between temperature/pressure increase and compressor work needed to achieve those increases. This linear nature of curve reflects the highly linear density change of ideal gases, which must be accomplished by compressor work, during compression. Near its critical point, as is expected at the point of the Brayton cycle where compression may be applied, sCO₂ working fluid has very low compressibility and therefore the density changes during compression are small. Compression is correspondingly quite efficient, and the amount of compressor work needed for a desired result is much lower than for an ideal gas. Other advantages of using sCO₂ over other available cooling media are that CO₂ is readily available, easily stored in a condensed form, and has low toxicity. As a primary nuclear coolant, sCO₂ also does not affect neutron passage or energy state and it shows low corrosive potential, all of which add to economic feasibility by simplifying design complexity, planning and building costs and operating overhead.

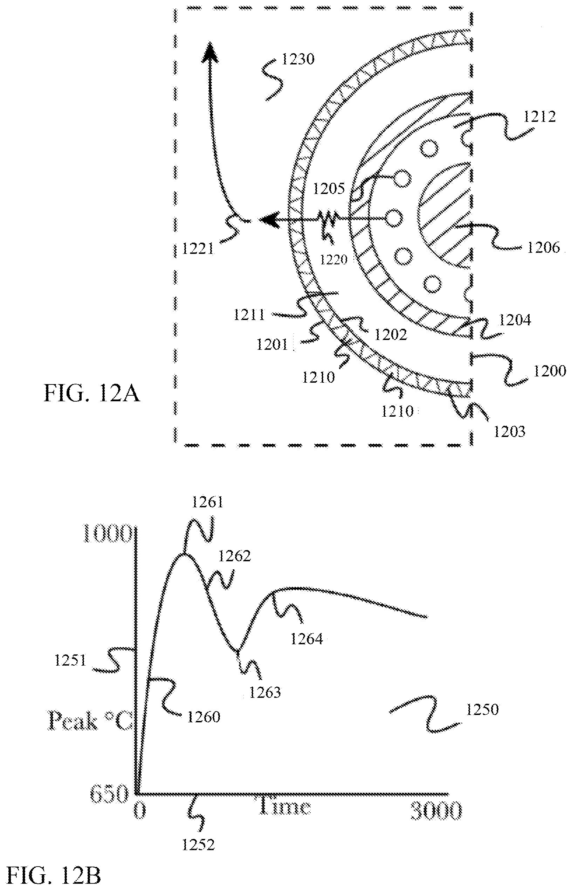

Embodiments of the GPTR 100 may be designed to allow for passive decay heat removal in the event of a failure of the coolant system resulting in a loss of coolant (LOC) event. In an LOC event, the GPTR 100 is immediately shutdown by bringing the reactor below critical, such as by use of control rods or adding liquid poison to the moderator (e.g., by adding borated water to the calandria). After the shutdown, heat, referred to as decay heat, is still generated for some period of time from the decay of fission products in the nuclear fuel created while the reactor was in operation. In an embodiment, the GPTR 100 may permit removal of decay heat via various passive means (conduction, natural convection, radiation) from the fuel through the pressure boundary (i.e., the pressure tubes), without causing damage to either. This is discussed in greater detail with reference to FIGS. 12A and 12B. In an alternative embodiment, an active cooling system, such as the cooler 132 may be provided to maintain the moderator within a specified temperature and pressure range during normal operation, an LOC event or both.

The design of the fuel columns and calandria core may be optimized to enhance the passive heat removal performance of the GPTR. For example, to prevent the pressure boundary from becoming too hot during normal operation insulation may be provided between the fuel and the pressure boundary. The insulation may be further designed to prevent the surface of the fuel columns from getting too hot even if the fuel experiences a drastic temperature rise. In an embodiment, the insulation may be designed to have lower thermal resistance at higher fuel temperatures, thus acting like a thermal regulator or a non-linear thermal resistor. For example, this may be achieved by incorporating a gas-filled gap between two concentric tubes in the fuel columns 104. As the temperature increases, one or both of the tubes may expand, thus reducing the gap between the tubes and thereby reducing the insulating effect of the gas-filled gap.

Other geometries may be used, according to various embodiments, to enhance the passive heat removal means provided by the pressure tube and calandria core design. For example, multiple fuel columns may be arranged in a single ring or generally annular arrangement (as opposed to a simple grid of rows and columns), to prevent interior fuel columns from obtaining a higher temperature during an LOC event.

For the purposes of this application nuclear fuel includes any fissionable material. Fissionable material includes any nuclide capable of undergoing fission when exposed to low-energy thermal neutrons or high-energy neutrons. Furthermore, fissionable material includes any fissile material, any fertile material or combination of fissile and fertile materials. A fissionable material may contain a metal and/or metal alloy. Fuels may be in a ceramic or composite fuel form. In an alternative embodiment, the fuel may be a metal fuel. Depending on the application, fuel may include at least one element chosen from U, Th, Am, Np, and Pu. The term "element" as represented by a chemical symbol herein may refer to one that is found in the Periodic Table--this is not to be confused with the "element" of a "fuel element". In one embodiment, the amount of actinides in the fuel may include at least about 90 wt % U-e.g., at least 95 wt %, 98 wt %, 99 wt %, 99.5 wt %, 99.9 wt %, 99.99 wt %, or higher of U (wt % here being the wt % of U relative to the weight of the actinides in the fuel, i.e., excluding light elements such as O, C. Si, etc.). The fuel may further include a refractory material, which may include at least one element chosen from Nb, Mo, Ta, W, Re, Zr, V, Ti, Cr, Ru, Rh, Os, Ir, and Hf. In one embodiment, the fuel may include additional burnable poisons, such as boron, gadolinium, or indium.

The moderate working temperatures of the GPTR provide a further economic benefit through the ability to use uranium fuels with lower temperature tolerance levels, such as (but not limited to) the uranium dioxide fuel with known stainless steels or ceramic cladding. The uranium dioxide may be unenriched natural unration (0.7 wt. % ²³⁵U) or, alternatively, may be enriched to any level as desired, for example enriched with from 1.0-20.0 wt. % ²³⁵U. Because of the passive cooling performance discussed with reference to FIGS. 12A and 12B, very-high-temperature-tolerant fuels such as coated particle fuels are not required, but may permit operation at higher power densities. Various embodiments use fuel and structural materials with sufficient temperature tolerance to permit both normal operation in coolant and elevated temperatures during passive decay heat removal. Example fuels include, but are not limited to: stainless steel-clad actinide oxide fuel; other stainless steel-clad high-temperature fuels (for example, using actinide nitrides, actinide carbides, or actinide silicides); fuels coated with ceramic such as silicon carbide composites; or specialized coated particle fuels such as TRISO fuel (while less economical, due to their cost, they are suitable for use in various embodiments).

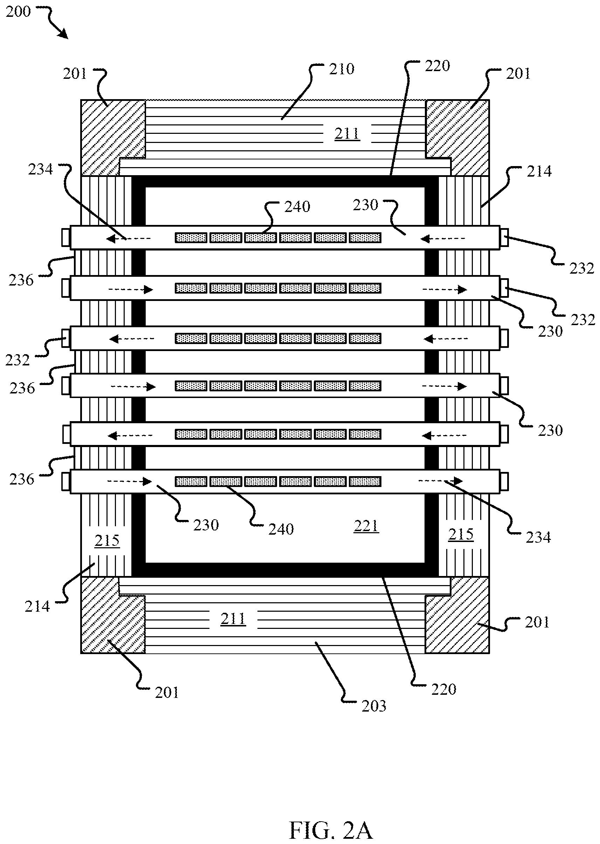

FIGS. 2A-2C illustrate embodiments of a reactor core designed for use in a GPTR such as that discussed with reference to FIG. 1. In FIG. 2A, a vertical cross-sectional view of a reactor core 200 is shown through a vertical row of pressure tubes 230. The reactor core 200 includes a calandria 220, which is a vessel that is filled with liquid moderator 221, such as heavy water (as mentioned above, in some embodiments light water, or a mix of light and heavy water, may be alternatively used). The calandria 220 is surrounded by side shields 214, a top shield 210, and a bottom shield 203. In the embodiment shown, the side shields 214 take the form of tanks filled with a liquid shielding agent such as water 215. The top shield 210 and bottom shield 203 may be of any shield material 211. For example, the top shield 210 and bottom shield 203 may also be liquid tanks or may be solid components made of some solid shielding material 211 as shown such as lead. Both liquid and solid shielding materials are known in the art and any suitable material, now known or later developed, may be used in any of the shields around the calandria 220. In an alternative embodiment, one or more shields may be located within the calandria 220 proper to provide additional neutron shielding for the calandria's walls.

A plurality of horizontal fuel columns (six are illustrated in FIG. 2A) in the form of pressure tubes 230 passes through side shield tanks 214 and the side walls of the calandria 220. Each pressure tube 230 has a plurality of fuel inserts 240 stacked axially within its interior, such that fuel inserts 240 are within the calandria 220. In the embodiment shown, the fuel inserts 240 do not extend into the side shields 214.

The calandria 220 and the shields 214, 210, 203 are structurally supported by a reactor vault structure 201, which is built using materials and techniques familiar to one having ordinary skill in the art. In the embodiment shown, the vault structure 201 is protected from neutron damage by the shields 214, 210, 203 such that no neutrons exiting the calandria 220 can pass through the vault structure 201 without first passing through at least some shield material 211, 215.

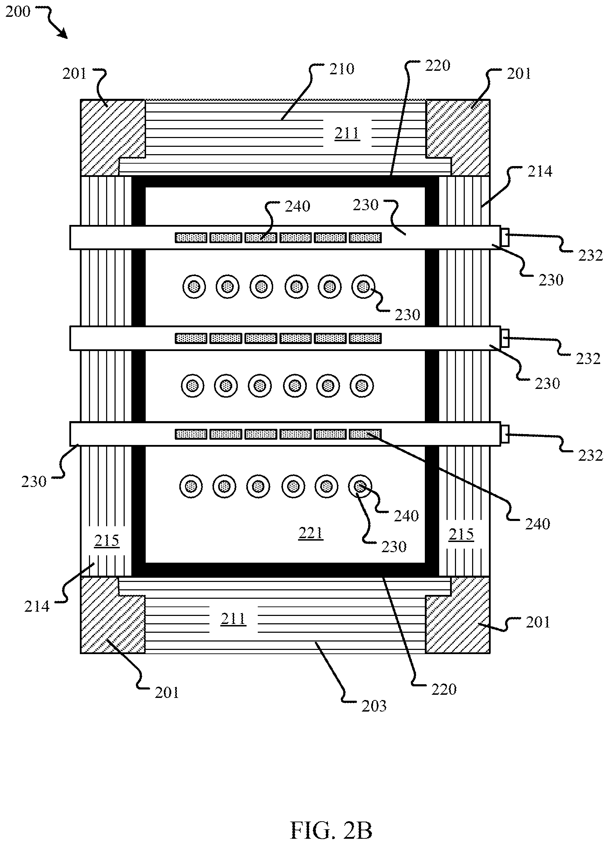

One or both ends of each fuel column 230 may be provided with access points to access the fuel inserts 240 within the fuel columns 230. For example, in an embodiment the pressure tubes 230 may be opened on both ends allowing fresh fuel inserts to be pushed in from one end and spent fuel inserts 240 to be removed from the other simultaneously. This is illustrated in FIG. 2A by fuel access ports 232 at each end of each pressure tube 230. One advantage of the arrangement of pressure tubes 230 shown in FIG. 2A is that fuel insert 240 may be shuffled into and out of the reactor core during operation, since each set of fuel inserts 240 may be forced out by insertion of a new set (or using a special tool), taking advantage of the straight-through design. In an alternative embodiment, only one end is accessible and fuel is inserted and removed from that end, as illustrated in FIG. 2B.

In some embodiments, coolant flow within pressure tubes 230 may alternate directions; that is, coolant in some fuel columns 230 flows from left to right, while coolant in other columns flows from right to left. In the embodiment shown in FIG. 2A, adjacent pressure tubes 230 have alternating flow directions. Coolant flow through the pressure tubes 230 is illustrated in FIG. 2A by dashed arrows 234. In an embodiment, flow may alternate between adjacent columns along a row or column of pressure tubes. In this way, thermal load may be balanced (since hot exit gases will alternate with cooler inlet gases in each local region within the calandria).

Coolant flow through the fuel columns 230 may be a single pass configuration in that gas flows through the fuel columns 230 once and then is passed to the power recovery equipment such as the turbine of FIG. 1. This embodiment includes manifolds and coolant lines (not shown) on both ends of the fuel columns 230, possibly complicating the design and access to the fuel. A double pass configuration, as shown in FIG. 2A, could also be used in which the coolant passes through two columns 230 before being passed to the power recovery equipment. The dual pass embodiment may make the coolant piping less complicated and improve the ease of refueling the reactor core 200. In FIG. 2A, each set of adjacent pressure tubes 230 are connected by a coolant transfer connection 236 on the left side of the figure. In the embodiment shown, this 236 is the only coolant piping on the left side of the reactor core 200, leaving more room for fuel handling transfer equipment (note shown). More passes than two may also be used.

In yet another embodiment, a "reheat" configuration may be used. In this configuration, coolant at a first temperature and pressure passes through a first set of one or more pressure tubes 230. The coolant is then passed out of the reactor core 200 to the power recovery equipment which outputs a lower pressure coolant stream after removing some energy from the coolant to generate power. The lower pressure coolant stream is then returned to the reactor core 200 where it is flowed through a second set of one or more pressure tubes 230 at the lower pressure to be heated up again before passing the coolant stream through the remainder of the power equipment. In some designs, this reheat approach permits higher efficiency to be attained for a given peak temperature. This configuration takes advantage of the use of discrete fuel columns 230 in the calandria, a design element that is not available is some other nuclear power reactor designs and which permits different coolant pressures to be present in the reactor core 201.

FIG. 2B illustrates a different embodiment of the reactor core in which the fuel columns 230 are provided in a crisscrossing lattice. In the embodiment shown, horizontal rows of pressure tubes 230 are alternatingly aligned along the cross-section shown perpendicular to the cross-section. In an alternative embodiment, the alternating horizontal rows are neither parallel or perpendicular to each other, but some angle in between. Such an alternating lattice increases the available space for fuel transfer equipment and coolant piping outside of the calandria 220 for each pressure tube 230 relative to the design shown in FIG. 2A. An alternative lattice design may also improve the heat transfer characteristics between the pressure tubes 230 and the moderator 221.

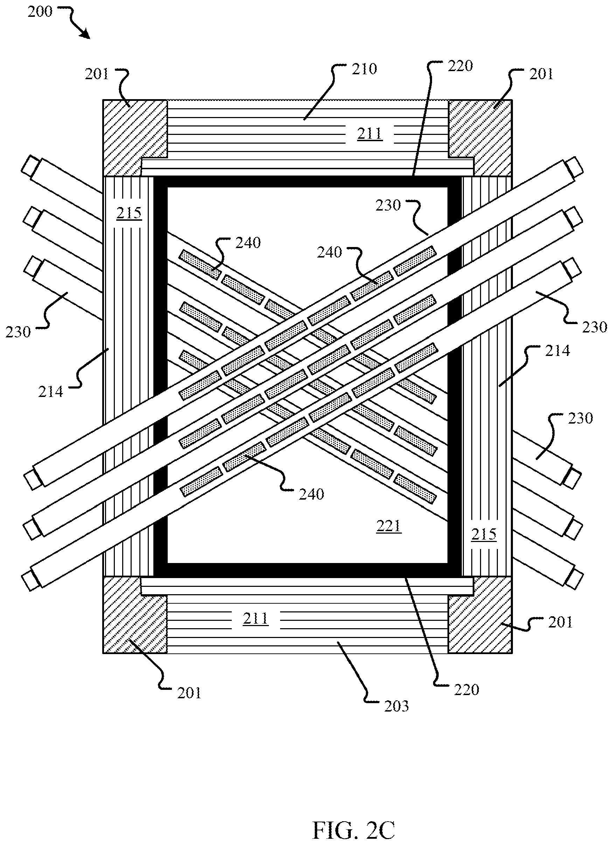

FIG. 2C illustrates yet another reactor core embodiment having a different crisscrossing lattice of fuel columns. In the embodiment shown, the pressure tubes 230 are diagonally oriented so that one end of each pressure tube 230 is higher than the other. This may facilitate the transfer of the fuel inserts 240 into and out of the pressure tubes 230. Similar to FIG. 2B, Such an alternating lattice may increase the available space for fuel transfer equipment and coolant piping outside of the calandria 220 for each pressure tube 230 relative to the design shown in FIG. 2A and improve the heat transfer characteristics between the pressure tubes 230 and the moderator 221.

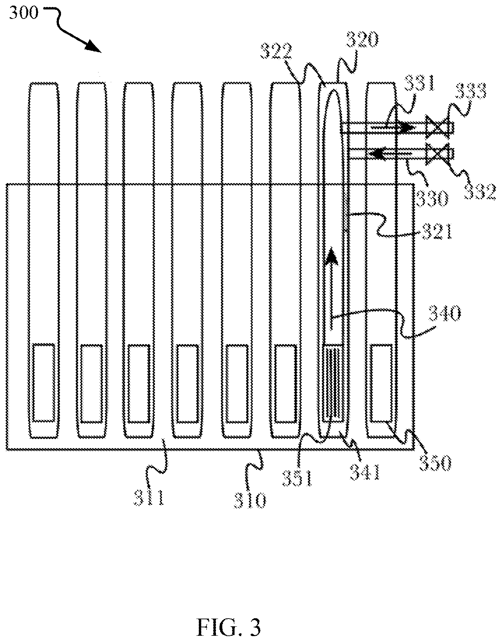

FIG. 3 illustrates an alternative embodiment of a reactor core designed for use in a GPTR such as that discussed with reference to FIG. 1. FIG. 3, as in FIG. 2, illustrates a cross-sectional view of a reactor core 300 shown with some of the components of the core 300. In FIG. 3, a calandria 310 is provided that is filled with a moderating liquid 311 as in FIG. 2. However, in FIG. 3 the fuel columns 320 are vertically oriented within the calandria 310. This allows the calandria 310 to be made using a tank with no penetrations in the sides or the bottom of the calandria 310.

In the embodiment shown, the fuel columns 320 are arranged, for example, in columns and rows within the calandria 310. One or more fuel inserts 350 are located at or near the bottom of the fuel columns 320. Coolant 322 is injected at the top of each column 320 and flows down into the bottom 341 of the column 320. The coolant then rises through the column 320 while in thermal contact with the fuel inserts 350. Heated coolant 340 is removed from the top of the columns 320. Interior piping 321 may be provided to channel heated coolant 340 through the center of the fuel column 320 and incoming, cold coolant through an annular region between the pressure boundary and the fuel inserts 350. Conduits or spaces 351 may be provided in the fuel inserts 350 to allow the coolant to pass through as shown. Each column 320 may further be provided with an inlet port 330 and an inlet valve 332 and an outlet port 331 with an outlet valve 333.

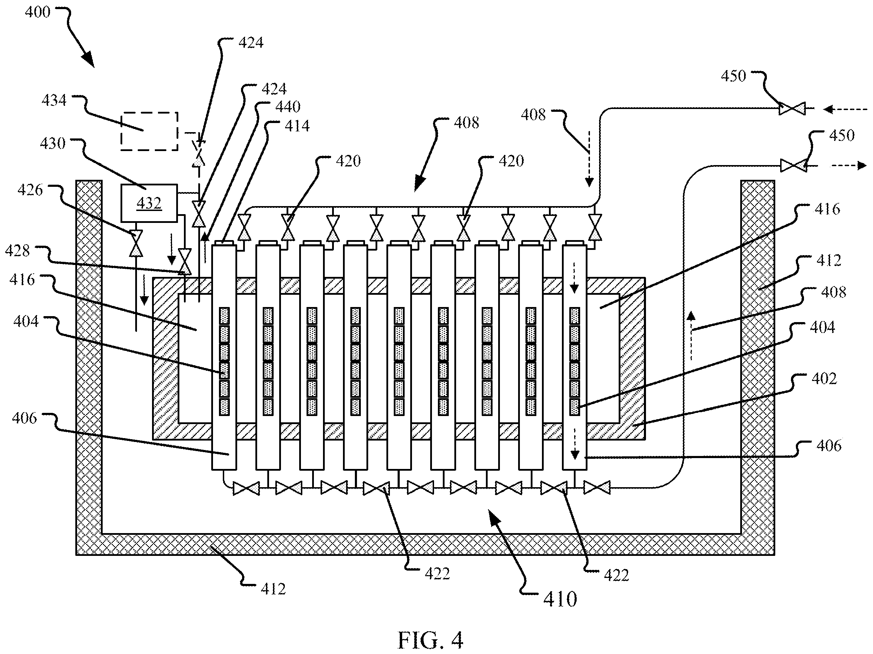

FIG. 4 illustrates yet another alternative embodiment of a reactor core designed for use in a GPTR having vertically oriented fuel columns. FIG. 4 illustrates a cross-sectional view through a row of vertically-oriented fuel columns 406 in a calandria 402. As described above, the calandria 402 is a vessel containing a moderator 416. The vertically-oriented fuel columns 406 pass through the top and the bottom of the calandria 402 and the volume, or pool, of moderator 416 contained in between. Shields (not shown) may be provided within or outside the calandria 402 as described above.

Coolant passes through the fuel columns 406 cooling the fuel inserts 404 within each column 406. In the embodiment shown, coolant enters the reactor core 400 and is distributed to each column 406 via an intake manifold 408 located above the fuel columns 406. The coolant is delivered to the top end of the fuels columns 406 and flows downwardly through the fuel columns 406, thus removing heat from the fuel inserts 404. Heated coolant exits the bottom end of the fuel columns 406 and is collected by an outlet manifold 410. The outlet manifold 410 routes the coolant out of the reactor core 400 to a power recovery system (not shown). Dashed arrows 408 are provided to illustrate flows of coolant through the intake manifold 408 and outlet manifold 410 and at various other locations in the coolant circuit including the fuel columns 406, manifolds 408, 410 and various coolant piping within the containment vessel 412.

FIG. 4 illustrates several additional components of a reactor core 400. In the embodiment shown, the calandria 402 is penetrated, both above and below, by the fuel columns 406. To protect against any possible leakage from the calandria 402, the reactor core 400 includes a containment vessel 412 which completely contains the calandria 402. Nuclear reactor containment vessels are known in the art and the containment vessel may be of any suitable design and material. In the embodiment shown, the containment vessel 412 includes a vessel without penetrations in the bottom or the sides of the vessel 412 at least up to some height above the calandria 402 and intake manifold 408. In an embodiment, a containment vessel head (not shown) may be provided to enclose the top of the containment vessel 412 through which some or all of the necessary penetrations of the vessel 412 are provided.

In the embodiment shown, the fuel inserts 404 are both inserted and removed from the top of the fuel columns 406. A fuel insert access port 414 is provided on each fuel column 406. In an alternative embodiment, the fuel inserts 404 may be removed from the bottom of the fuel columns 406. In this embodiment the containment vessel 412 is sized to provide for the removal of fuel inserts 404 below the calandria 402.

In the embodiment shown in FIG. 4, various valves are provided to automate, or otherwise allow for the control of, the flow of coolant through the reactor core 400. An intake valve 420 is provided between the intake manifold 408 and each fuel column 406. The intake valves 420 may include one or more of: check valves preventing upward flow (back flow) of coolant out of the fuel column 406; flow control valves controlling the flow rate of coolant into the top of the fuel column 406; and isolation valves 406 that prevent flow of coolant into the fuel column 406. In an embodiment, a single valve may be provided that performs all of the functions described above (i.e., back flow prevention, flow control, and isolation).

The operation of any of the intake valves 420 may be automated. For example, check valves may be automatic valves that prevent all back flow. In addition, valves may be automatically controlled based on monitored conditions of the reactor core 400 or other reactor components. For example, flow control valves may be automated to increase or decrease flow through a particular column 406 based on a temperature associated with the column 406, such as the column temperature or the temperature of coolant exiting the column 406.

In the embodiment shown, the outlet manifold 410 includes a number of outlet valves 422. An outlet valve 422 is provided at the bottom outlet of each fuel column 406. The outlet valves 422 may include one or more of: check valves preventing upward flow (back flow) of coolant out of the fuel column 406; flow control valves controlling the flow rate of coolant out of the bottom of the fuel column 406; and isolation valves 406 that prevent flow of coolant out of the bottom of the fuel column 406. In an embodiment, a single valve may be provided that perform all of the functions described above (i.e., back flow prevention, flow control, and isolation).

Similar to the intake valves 420, the operation of any of the outlet valves 422 may also be automated. For example, check valves may be automatic valves that prevent all back flow. In addition, valves may be automatically controlled based on monitored conditions of the reactor core 400 or other reactor components. For example, flow control valves may be automated to increase or decrease flow through a particular column 406 based on a temperature associated with the column 406, such as the column temperature or the temperature of coolant exiting the column 406. The outlet valves 422 of the manifold 410 may be serially oriented as shown or may be in parallel as the intake valves 420 are represented in the inlet manifold 408. Likewise, the intake valves 420 may be serially oriented or in parallel.

Flow of coolant into and out of the reactor core 400 may be further controlled by containment valves 450 in the coolant inlet and outlet piping. These valves 450 may be located external to the containment vessel or within the containment vessel or vessel head. For example, in an embodiment the containment valves 450 are located at the point in the piping where the coolant enters and exits the building containing the reactor core 400. Again, the containment valves 450 may include one or more of: check valves preventing upward flow (back flow) of coolant into and out of the reactor core 400; flow control valves controlling the flow rate of coolant into and out of the reactor core 400; and isolation valves 406 that prevent flow of coolant into and out of the reactor core 400.

Further safety and control is provided by one or more moderator pressure relief valves 424. A moderator pressure relief valve 424 automatically opens when the moderator 416 in the calandria 402 reaches a selected pressure. The overpressure may be vented into one or more tanks or other vessels. In the embodiment shown, the moderator pressure relief valve 424 vents the pressure into a reflood tank 430. In this embodiment, the reflood tank 430 is provided to provide additional cooling capacity in the event of an emergency. In an embodiment, the reflood tank 430 contains a reflood fluid 432, such as light water, that can add thermal capacity (by replacing moderator lost to boiling) to the moderator 416 in the calandria 402. Alternatively, the reflood fluid 432 may be the same as the calandria moderator 416.

In the event of an overpressure condition in the calandria 402, the illustrated pressure relief valve 424 and reflood tank 430 configuration causes the reflood fluid 432 to flow into the calandria 402 and replace the original moderator 416. Flow of reflood fluid 432 from the reflood tank 430 into the calandria 402 may be further controlled by a reflood outlet valve 428, as shown. In an embodiment, the valve 428 may be a check valve to prevent backflow into the reflood tank 430. In an embodiment, the pressure relief valve 424 and reflood outlet valve 428 may be controlled to maintain the level of moderator in the calandria 402 at a desired level. Solid arrows 440 are provided to illustrate direction of flow of reflood fluid into and moderator out of the reflood tank 430 at selected locations within the fluid/moderator circuit created by the calandria 402 and reflood tank.

The reflood tank 430 may be sized to contain a volume of fluid 432 sufficient to replace all of the moderator 416 in the calandria 402. The reflood tank 430 may be within the containment vessel 412 as shown or may be outside of the containment vessel 412, such as located vertically above the containment vessel.

Alternatively, the reflood tank 430 may be sized to contain a volume of reflood fluid 432 sufficient to both replace all of the moderator 416 in the calandria 402 and to fill the containment vessel 412. In this embodiment, the reflood tank 430 may be above the containment vessel 412 so that gravity will cause the fluid 432 to flow into the containment vessel 412 upon the opening of a flow control valve 426.

In yet another embodiment, the pressure relief valve 424 may vent pressure into an optional second tank 434. This second tank 434 and a second pressure relief valve 424 are illustrated as optional via dashed lines in FIG. 4. The second tank 434 may be a second reflood tank or a simple overflow tank as shown.

The reflood tank 430 and the second tank 434 may be single tanks as shown or may be multiple, different tanks fluidly connected in serial, parallel, or both. The tanks may be pressure vessels or may be open tanks.

In alternative embodiments, any of the valves illustrated and discussed above may be replaced or supplemented with one or more non-moving flow control components. This may include venturi flow limiters or orifice plates, for example. Such non-moving flow control components may be included at the fuel column inlets and/or outlets or at any location along the sCO₂ coolant circuit.

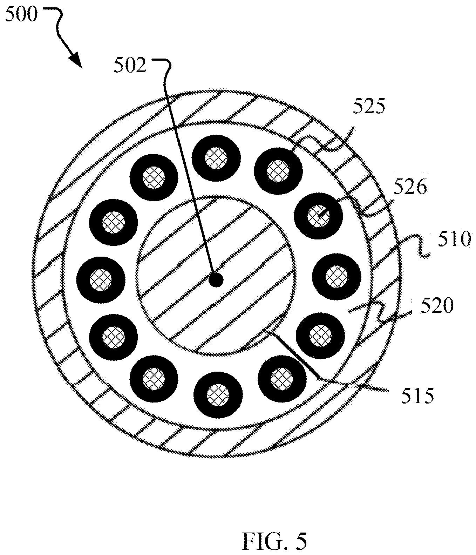

FIG. 5 illustrates a cross-sectional view of an embodiment of a nuclear fuel insert, such as insert 240 of FIGS. 2A-2C, suitable for use in a fuel column. In the embodiment shown, 12 individual hollow fuel tubes 525 are aligned in columns arranged in an annulus about the longitudinal axis 502 of the insert 500. The fuel tubes 525 are within an annular void space 520 through which coolant flows.

In an embodiment, the center void space 526 of the hollow fuel tubes 525 is filled with helium, which acts as a buffer for thermal expansion and allows for dimensional change in annular fuel column 525 as fission product gases build up over core lifetime. The center void space 526 also lowers the peak fuel temperature and provides space for fission product gases to collect. The helium may be flowing (requiring a means for circulation and a cladding - not shown) or the fuel tubes 525 may be closed-ended, thus trapping the helium within the tube 525.

A central graphite column 515 may be provided as shown to act as a secondary heat sink during passive heating (for example, during shutdown or loss of coolant). In an alternative embodiment, the central column 515 may be of any other suitable material or combination of materials such as silicon carbide and other ceramics/composites. The central column 515 may or may not be provided with an exterior cladding layer. Similarly, an outer graphite annular sleeve 510 may be provided to assist in thermal management and in moderation of fast neutrons and to provide structure and ease of fuel handling. Again, in an alternative embodiment, the sleeve 510 may be of any other suitable material or combination of materials such as silicon carbide and other ceramics/composites and may or may not be provided with an outer cladding layer.

The fuel insert may also include one or more structural elements (not shown). For example, one or more structural elements may run through the insert axially, either inside the central column, replacing the central column, or as part of the external sleeve. Such a structural element might be a rod, tube, or cable. The structural element may link different pieces of the fuel insert, provide structural support to the other components, bear the weight of the fuel, and aid in fuel handling.

At the ends of the insert 500 and/or at various locations through the insert 500, not shown, a framework or other structural elements may be provided to retain the various components in their relative locations. The ends of the inserts 500, however, will at least provide for coolant flow from one insert's coolant flow region 520 to an adjacent insert's coolant flow region 520. This allows multiple inserts 500 arranged along a common longitudinal axis to form a coolant flow path through the coolant regions 520 of the adjacent inserts 500 from one end of the insert assembly to the other.

In an embodiment, the ends of the inserts 500 may be provided with complimentary connectors allowing two inserts to be connected together to form an insert assembly. The connectors may prevent leakage of the coolant out of the insert assembly. In an alternative embodiment the connectors are not fluid tight and some coolant leakage may be allowed. In yet another embodiment, no connectors are provided that the inserts are simply maintained in an abutting arrangement with the coolant regions 520 of adjacent inserts aligned with each other. The design shown in FIG. 5 provides for good thermal management and allows a high power density to be maintained.

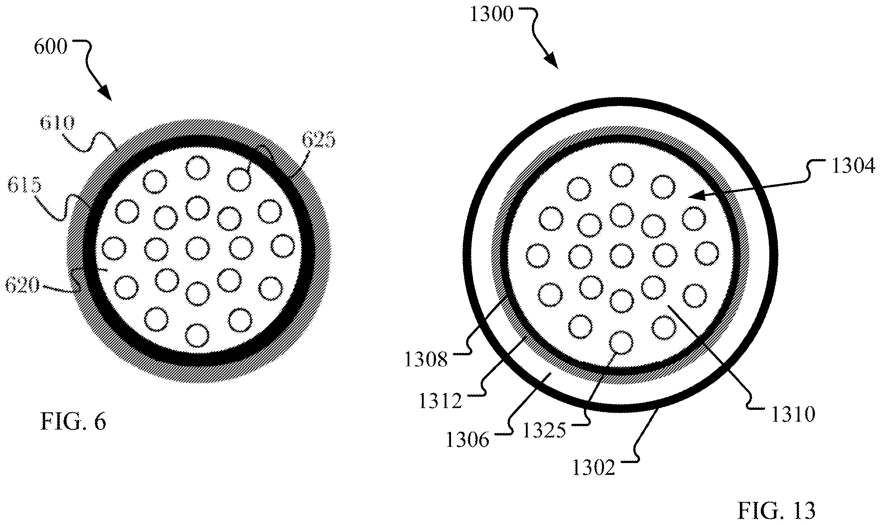

FIG. 6 illustrates a cross-sectional view of an alternative embodiment of a nuclear fuel insert suitable for use in a fuel column. Similar to that shown in FIG. 5, the insert 600 includes a number of individual fuel tubes 625. Again, the fuel tubes 625 may be filled with a gas such as helium, filled with a liquid at operational temperature such as a salt, or may be solid rods of nuclear material. The fuel tubes 625 are arranged more densely than in FIGS. 3 and 5 within a cylindrical void 620 of the insert 600 through which coolant gas flows.

In one aspect of the embodiment 600, coolant region 620 is defined on its outer edge by a graphite tube 610. As shown in FIG. 6, the graphite tube 610 is provided with an optional internal coating layer 615.

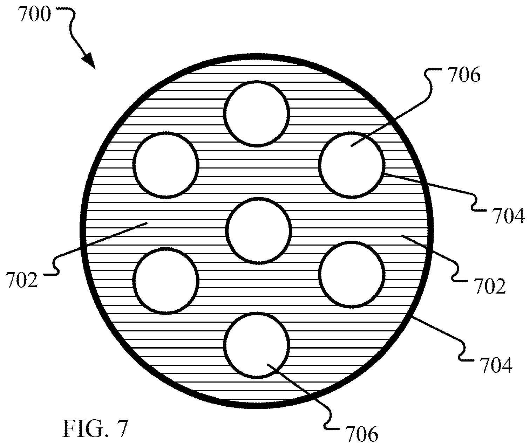

FIG. 7 illustrates a cross-sectional view of yet another embodiment of a nuclear fuel insert suitable for use in a fuel column. In the embodiment shown, the primary component of the insert 700 is a solid rod 702 of nuclear fuel. The solid rod 702 is provided with some number, seven are shown, of flow channels 706 that penetrate the rod. The flow channels 706 may be simple, straight paths, circular in cross-section (as shown), that run the length of the insert 700. In alternative embodiments, the flow channels 706 may be any shape in cross-section and may even vary in size or shape along the length of the insert. In addition, in alternative embodiments the flow paths may be any shape of path, such as spiral or angular, through the rod 702. Such embodiments may be 3D printed or made in conventionally in multiple sections and then combined to form the rod 702.

Exposed surfaces of the nuclear fuel may be provided with a protective layer 704 in the flow channels 706, on the outer surface, or both. In an embodiment, zirconium or an alloy of zirconium may be used as the protective layer 704. The protective layer may be a structural element, such as a tube, or may simply be a non-structural coating or cladding applied to or deposited on the surface to be protected.

The inserts 500, 600, 700 discussed above may be any desired length. For example, in an embodiment an insert's length matches the full operational length of fuel to be inserted in a fuel column in the calandria. In this configuration one can either have shorter fuel tubes, optionally linked by a connecting structure, or the fuel tubes themselves can also span the entire length of the fuel insert.

In an alternative embodiment, the inserts' length is selected so that an integral number of fuel inserts are required for each fuel column. Depending on the length, however, intermediate structural components (not shown) may be provided on the inserts or in the fuel column, for example to prevent sagging of the nuclear fuel tubes 625, 525 when the longitudinal axis of the insert is horizontally aligned, or to prevent thermal bowing, vibration, and/or wear in both vertically and/or horizontally aligned inserts.

Further, in any embodiment the ends of the inserts can include additional features, such as structural features, shock absorbers, flow control devices, instrumentation, pressure boundaries, and neutron shielding.

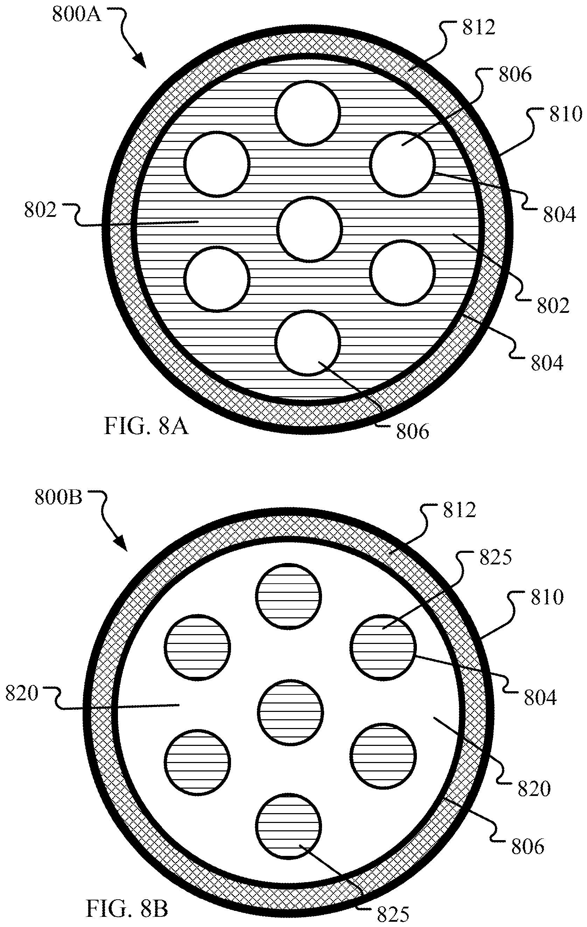

FIGS. 8A and 8B illustrate cross-sectional views of an embodiment of a nuclear fuel insert that incorporate a gas gap for use in a fuel column. FIG. 8A shows a fuel insert 800A similar to that shown in FIG. 7 in that the primary component of the insert 800A is a solid rod 802 of nuclear fuel. The solid rod 802 is provided with some number, seven are shown, of flow channels 806 that penetrate the rod 802. The flow channels 806 may be simple, straight paths circular in cross-section (as shown) that run the length of the insert 800A. In alternative embodiments, the flow channels 806 may be any shape in cross-section and may even vary in size or shape along the length of the insert. Exposed surfaces of the nuclear fuel may be provided with a protective layer 804 in the flow channels 806, on the outer surface, or both. In an embodiment, zirconium or an alloy of zirconium may be used as the protective layer 804. The protective layer may be structural element, such as a tube, or may simply be a coating applied to the surface to be protected.

Unlike the insert 700A of FIG. 7, the insert 800A of FIG. 8B incorporates the gas gap 812 into the insert 800A so that it can be used in a pressure tube (not shown) that need not have a gas gap. In this embodiment, each insert 800A will have its own, independent gas gap 812 with a trapped gas layer.

FIG. 8B shows a cross-sectional view of an alternative embodiment of a nuclear fuel insert similar to that shown in FIG. 6 but incorporating a gas gap or other insulating structure. The insert 800B includes a number of individual fuel tubes 825. Again, the fuel tubes 825 may be filed with a gas such as helium, filled with a liquid at operational temperature such as a salt, or may be solid rods of nuclear material. In this embodiment, they are illustrated as solid rods of fuel. The fuel tubes 825 are arranged within a cylindrical void 820 of the insert 800B through which coolant gas flows. In one aspect of the embodiment 800B, coolant region 820 is defined on its outer edge by a tube 806 of graphite, zirconium alloy, or other material.

In FIG. 8A, the gas gap 812 is between the exterior surface of the rod 802 (or the protective layer 804 that forms the exterior surface of the rod, if such as layer is used) and an outer tube 810, which is enclosed to prevent flow of gas within the gas gap 812. In FIG. 8B, the gas gap 812 is between the exterior surface of the graphite tube 806 and the outer tube 810, which is enclosed at both ends to prevent the gas from escaping the gas gap 812. These embodiments allow the pressure tubes to be a more simple construction and, thus, potentially less expensive, and permits regular replacement of the insulation when the fuel is replaced.

In an alternative configuration, the outer tube 810 can be omitted in either embodiment described above, and the pressure tube can serve the same function as the outer tube (i.e. forming the outer boundary of the gas gap/insulating layers)

The gas gap 812 may be similar to that described above. In the embodiment shown, the outer tube 810 is separated from the other internal components of the inserts 800A, 800B by the gas gap 812. The outer tube 810 may be of any suitable material such as, for example, graphite or a zirconium alloy. The gas gap 812 is an annular region filled with stagnant gas, such as high pressure CO₂. Other suitable insulating gases include nitrogen (N₂), helium, enriched nitrogen, and argon. The stagnant gas can also be connected to the coolant system and use the same gas. The gas gap 812 acts as a thermally insulating region between outer tube 810 and the internal components of the fuel insert. The thermal performance of a fuel column can be controlled to meet a desired specification through the selection of the insulating gas and the thickness of the gas gap 812. This allows the fuel columns, as a whole, to be designed to specific LOC events so that sufficient heat transfer is obtained through the pressure tube to allow for passive cooling during the LOC event.

A standoff structure may be provided within the gas gap 812 as shown. In an embodiment, the standoff structure may be made from an embossed sheet of thin structural metal material, as described above, to ensure that the width of the gap is maintained throughout the length of the insert. The standoff structure may be of any suitable design including, but not limited to, ribs, fins, or protuberances provided on the exterior of the rod 802 or the graphite tube 806. In an alternative embodiment, the standoff structures may be some number of solid, insulating spheres evenly spaced about the exterior of the rod 802 or the graphite tube 806 and between the rod 802 or the graphite tube 806 and the interior of the tube 810.

In an embodiment, the standoff structure may be flexible so that the thickness of the gas gap 812 is allowed to shrink as the temperature of the internal components increases. This, in turn, reduces the insulating effect of the gas gap 812 which increases the thermal flux from the interior of a fuel column to the pressure tube and, thus, to the liquid moderator in the calandria.

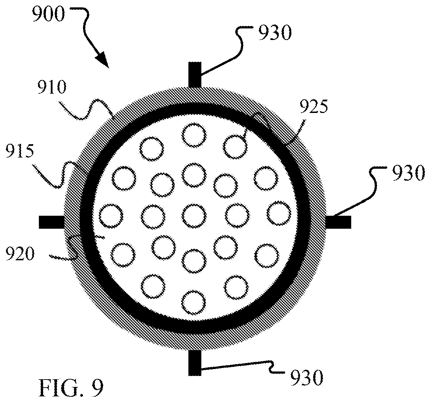

FIG. 9 illustrates a cross-sectional view of an alternative embodiment of a nuclear fuel insert incorporating a standoff structure suitable for use in a fuel column. Similar to that shown in FIG. 6, the insert 900 includes a number of individual fuel tubes 925. Again, the fuel tubes 925 may be filed with a gas such as helium, filled with a liquid at operational temperature such as a salt, or may be solid rods of nuclear material.

In one aspect of the embodiment 900, coolant region 920 is defined on its outer edge by a graphite or zirconium alloy tube 910. As shown in FIG. 9, the graphite tube or zirconium alloy 910 is provided with an optional internal coating layer 915.

The insert 900 mainly differs from that of FIG. 6 by the additional of several standoff elements 930 around the circumference of the insert 900. When assembled into a pressure tube that does not have an integrated gas gap, a gas gap will be created by the standoff elements 930. Any type or shape of standoff structure 930 may be used. For example, in an embodiment the standoff structure 930 is a spiral winding that runs the length of the insert 900. In yet another embodiment, the standoff structure is a series of discontinuous ribs or protuberances spaced about the exterior of the insert 930.

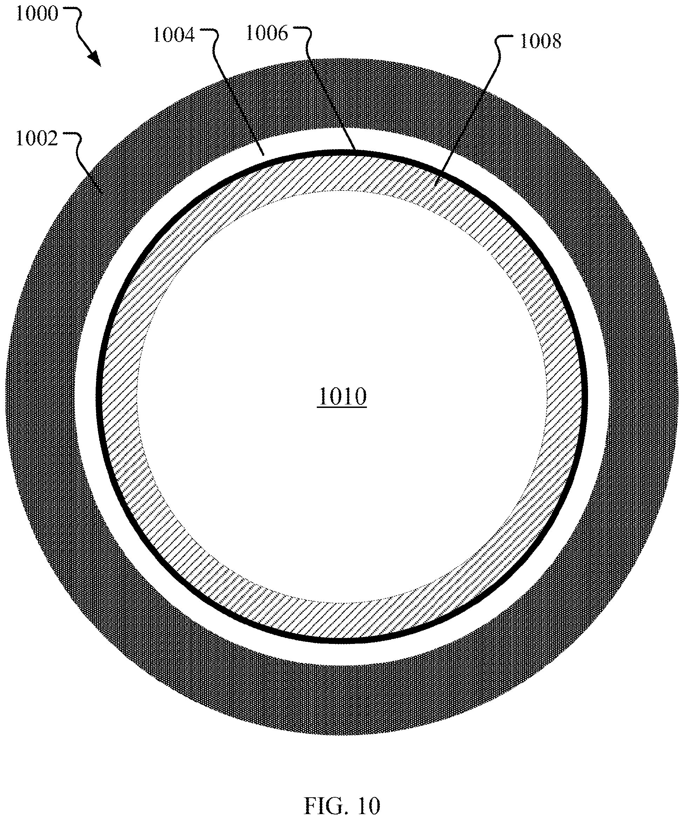

FIG. 10 illustrates a cross-sectional view of a pressure tube suitable for containing fuel inserts and acting as the exterior pressure-boundary of a fuel column. FIG. 10 illustrates only the pressure tube portion 1000 of the fuel column. Specifically, the pressure tube 1000 illustrated is exaggerated to show the different components and regions within the pressure tube 1000. In the embodiment shown, the pressure tube 1000 includes an outer, structural tube 1002, a gas gap 1004 separating the structural tube 1002 from a guide sleeve 1008. An optional material layer 1006 between the gas gap 1004 and guide sleeve 1008 may also be provided as shown. The material layer 1006 is illustrated as a single layer, but may generally be any number of layers of various compositions as needed to maintain the gas gap or reduce thermal conductance. For example, a silica fabric may be used as one layer 1006.

The outer component 1002 of the pressure tube 1000 is the structural pressure boundary and is formed by a structural tube 1002 of material such as steel, a zirconium or aluminum alloy, a ceramic, or a composite material. In an embodiment, the structural tube 1002 is made of a material such as HT-9 steel, or a high-temperature ferritic, martensitic, or stainless steel. Relative to the thickness of the other components of the pressure tube 1000, the structural tube 1002 is likely to be thicker than the other layers as it has to withstand the high-pressure differential between the high pressure of the coolant in within the pressure tube 1000 and the low-pressure liquid moderator outside of the pressure tube.

The structural tube 1002 may further be provided with a cladding (not shown) to prevent interaction of the structural material with the liquid moderator in the calandria which will be in contact with the exterior surface of the pressure tube 1000 when in use.

The structural tube 1002 is separated from the other internal components of the pressure tube 1000 by a gas gap 1004. The gas gap 1004 is an annular region filled with stagnant gas, such as high pressure CO₂. Other suitable insulating gases include nitrogen, helium, enriched nitrogen, and argon. The gas gap 1004 acts as a thermally insulating region between structural tube 1002 and the internal components of the fuel column. The thermal performance of the pressure tube 1000 can be controlled to meet a desired specification through the selection of the insulating gas and the thickness of the gas gap 1004. This allows the fuel columns, as a whole, to be designed to specific LOC events so that sufficient heat transfer is obtained through the pressure tube 1000 to allow for passive cooling during the LOC event.

A standoff structure (not shown) may be provided within the gas gap 1004, such as a tube made from an embossed sheet or sheets of thin structural metal material, or a tube made from a porous ceramic or aerogel material, to ensure that the width of the gap is maintained throughout the length of the pressure tube 1000. In an embodiment, the standoff structure may be flexible so that the thickness of the gas gap 1004 is allowed to shrink as the temperature of the internal components increases. This, in turn, reduces the insulating effect of the gas gap 1004 which increases the thermal flux from the interior of a fuel column to the structural tube 1002 and, thus, to the liquid moderator in the calandria.

The guide sleeve 1008 is situated within the inner diameter of pressure tube 1000. It is provided to contact and guide the fuel inserts as they are installed and removed and retain the coolant as it flows through the central region 1010. As mentioned above, one or more protective layers 1006 maybe be provided between the guide sleeve 1008 and the gas gap 1004, in particular between any stand-off structure within the gas gap 1004 and the guide sleeve 1008 to prevent damage as the guide sleeve expands and contracts against the stand-off structure.

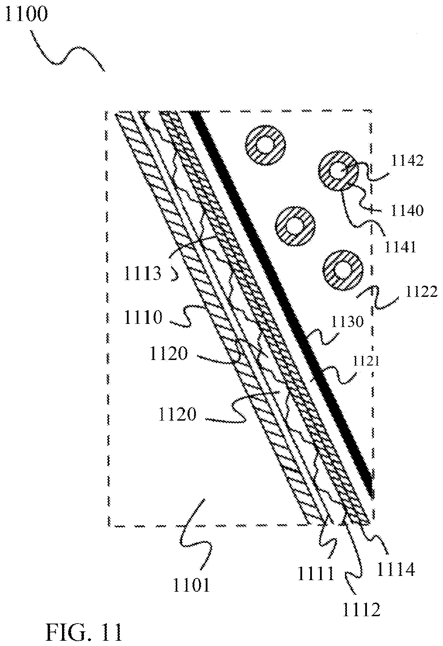

FIG. 11 shows a detailed cross-sectional view of a portion of the interface 1100 between a nuclear fuel insert and a pressure tube. In the embodiment shown, the pressure tube includes an outer structural tube 1110 attached to the exterior surface which is in contact with the moderator 1101 (e.g., water) in the calandria. Next to the interior surface of the structural tube 1110 is a protective layer 1111. In an embodiment, the protective layer 1111 is a thin zirconium alloy wrap. Next is the gas gap 1120, this time illustrated with the standoff structure 1112 in the gas gap 1120. As discussed above, the standoff structure 1112 may be an embossed or corrugated zirconium alloy sheet.

Next, a second thin protective layer 1113 is provided, for example of silica fabric 1113. The second thin protective layer 1113 prevents contact between the standoff structure 1112 and a guide tube 1114. In an embodiment, the guide tube 1114 is made of a material such as zirconium alloy or stainless steel. The gas gap 1120 within which sheet 1112 is disposed, which region lies between silica fabric 1113 and zirconium wrap 1111, provides a static gas gap for thermal insulation between pressure tube 1110 and the fuel insert.

Next, a second, thin gas gap 1121 is shown between the guide tube 1114 and a graphite sleeve 1130, which forms the exterior of the fuel insert. This second, thin gas gap 1121 represents the clearance fit between a removable fuel insert and the pressure tube. Depending on the amount of clearance between the two and the positioning of the two, the second, thin gas gap 1121 may vary in thickness and, in some locations, the guide tube 1114 and the graphite sleeve 1130 may be in direct contact.

Graphite sleeve 1130 surrounds a cylindrical void 1122 within which the fuel tubes 1140 are arranged. Again, the fuel tubes 1140 are illustrated as having an inner region 1142, which may contain a different material such as a stagnant gas, a liquid, or a solid. In an embodiment, this region may be filled with the same coolant as flowing through the coolant region 1122 of the insert. In an embodiment, the fuel tubes 1140 may be porous and penetrate into the inner region 1142. In this embodiment, the ends of the fuel tubes may or may not have openings to facilitate a strong flow of coolant through the center 1142 of the tubes 1140, in addition to the flow in the main gas flow region 1122 outside of the fuel tubes 1140.

The exterior surface 1141 of the fuel tubes 1140 is exposed to the coolant flow in the fuel insert. Coolant flows through void 1122 as it cools the fuel tubes 1140 and thereby gains heat to be used in the direct power cycle.

In the above embodiments of the pressure tubes, the gas gaps or other insulating structures are provided as part of the pressure tubes. In alternative embodiments, the gas gap or standoff structures, which create the gas gap when assembled, could be incorporated into the fuel insert instead.

FIGS. 12A and 12B are provided to illustrate the thermal performance of an embodiment of a fuel column in a reactor core during an LOC event. FIG. 12A illustrates an embodiment of a fuel column 1200 and FIG. 12B illustrates the modelled thermal performance of that fuel column 1200 during an LOC event. The exterior of the fuel column 1200 is in contact with calandria water 1230.

The fuel column 1200 includes a pressure tube that includes an inner guide tube 1202, an embossed zirconium alloy sheet 1203, and a structural tube 1201 (with an insulating static gas gap 1210 between guide tube 1202 and the structural tube 1201 that contains the standoff sheet 1203).

Within the pressure tube is a fuel insert that includes a central graphite rod 1206 surrounded by void 1212 through which coolant flows. Within the coolant flow region 1212 is an annulus of fuel tubes 1205 arranged in a ring. An optional outer graphite annulus 1204 forms the exterior of the fuel insert. A thin static gas gap 1211 between the fuel insert and the pressure tube is also provided in this embodiment for modeling purposes.

In such an arrangement, during an LOC event a passive thermal conductance path 1220 is established between fuel tubes 1205 (where fission product decay heat and residual heat from operations are present and temperatures are at their highest). The large volume of cool moderator 1230 allows heat from fuel tubes 1205 to be removed through cooling 1221 by moderator 1230.

FIG. 12B illustrates the results of modelling an LOC event. The model was developed as a finite element model of a representative reactor using the software suite ABAQUS^{™} FEA by Dassault Systems Simulia Corporation. The representative reactor design used has a 16-fuel column single ring bundle. The model assumed the peak power and peak temperature conditions occurred at the same time. The operational initial coolant temperature was 590 °C, the initial moderator temperature was 70°C, and the fuel temperature at the exterior surface of the pressure tube was 775 °C at the time of the LOC. The average volumetric power density in the fuel was 2.5×10⁸ W/m³. The cross-sectional area of each fuel column was 1.34×10⁻⁴ m². The model was designed to approximate a worst-case scenario and ignored edge effects, modeling only the radial heat dissipation.

The individual fuel columns were modeled as an insert of UO₂ fuel, within a pressure tube of stainless steel (having the properties of SS316), a zirconium-alloy pressure tube (with properties of alpha phase zircalloy-2), a graphite layer, and an insulating layer with its thermal conductance set to permit no more than 2% thermal power loss during operation.

In the model, a loss of coolant after sustained power operations was simulated in which radiative and conductive passive heat transfer to the calandria moderator 1230 are the only available mechanisms to remove decay heat from fuel. Graph 1250 illustrates a computed thermal performance of the embodiment upon a total loss of coolant within the fuel column 1200. This loss of coolant was modeled by the instantaneous replacement of coolant with a vacuum at time t=0, interrupting sustained full power operation conditions. The x-axis 1252 shows time elapsed from loss of coolant. The y-axis 1251 shows peak fuel temperature in degrees Celsius.

Shortly after loss of coolant (and subsequent reactor shutdown, which ends the addition of heat from fission), fuel temperature increases rapidly 1260 to a peak 1261 of about 900 °C (depending on the type of fuel used, this is well below the temperature at which fuel failure will occur). The temperature then drops rapidly 1262 as residual heat from reactor operations is removed, achieving a local minimum 1263 about four minutes after loss of coolant; at this point the buildup of decay heat from decay of fission products causes the temperature to gradually increase 1264 before slowly dropping over many hours as decay heat generation drops off. As can be seen, the modeling indicates that the GPTR embodiment of FIG. 12A achieves a robust passive heat removal capability that avoids fuel failure after a total loss of coolant, relying on entirely passive heat removal.

An advantage of GPTR designs described herein is the separation of nuclear engineering requirements centered on reactivity control from thermodynamics requirements centered on driving the power cycle and removing heat in loss of coolant situations. Another advantage of the GPTR designs described herein is the separation between the systems used to drive the power cycle (using the high pressure, high temperature coolant gas), and the systems used to safely remove decay heat (using the low pressure, low temperature moderator water). Unlike pressurized water reactors, for example, where the primary coolant is also the chief moderator, in the GPTR embodiments described herein the coolant is essentially nonreactive in a nuclear sense (that is, has very low reactivity worth). This allows the thermal design to be optimized separately from the reactivity management. That is, in the GPTR designs herein, there is a relatively small effect on the reactivity of the GPTR in the event of a loss of the coolant. Moderation is performed primarily by low-temperature, low-pressure calandria fluid (e.g., heavy water). Because there is no significant change in moderator temperature during reactor operations, there is little effect on overall reactivity from the calandria moderator's negative thermal coefficient of reactivity (α_{T}).

FIG. 13 illustrates a cross-sectional view of an alternative embodiment of a fuel column designed to receive cooled coolant and remove heated coolant from the same end of the fuel column such as may be used with the reactor core illustrated in FIG. 3. The fuel column 1300 includes a pressure tube 1302, such as the pressure tube 1000 shown in FIG. 10. Within the pressure tube 1302, is a fuel insert 1304 contained within an interior insert retaining tube 1312. The interior insert retaining tube 1312 is separated from the interior surface of the pressure tube 1302 by an annular region 1306 that acts as a coolant flow path. In an embodiment, this region 1306 receives the incoming, cool coolant and conveys the coolant to the distal end of the fuel column 1300.

The fuel insert 1304 is similar to that shown in FIG. 6. The insert 1304 includes a number of fuel tubes 1325 arranged within the annular region 1310 of the insert's tube 1308. The fuel insert's tube 1308 may be graphite, as discussed above or a multilayer construction of different materials.

In an embodiment, the interior insert retaining tube 1312 may be contiguous and forms a gas barrier between the cool coolant in the exterior flow region 1306 and the heated coolant flowing through the interior region 1310 of the insert. In an alternative embodiment, the outer tube 1308 of the fuel insert 1304 acts as the gas barrier.

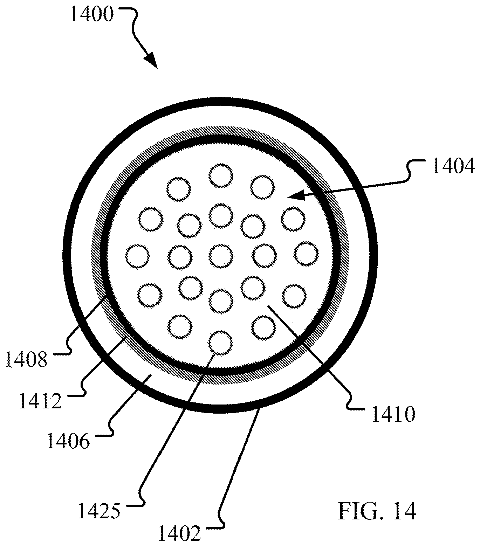

FIG. 14 illustrates a cross-sectional view of yet another alternative embodiment of a fuel column provided with a moderator around the outside of the fuel column. In this embodiment, the moderator is a sheath of moderating light water that provides an extra layer of moderating material separate and independent from the moderation provided by the calandria's moderator. The fuel column 1400 includes a pressure tube 1402, such as the pressure tube 1000 shown in FIG. 10. Within the pressure tube 1402, is a fuel insert 1404 contained within an interior insert retaining tube 1412. The interior insert retaining tube 1412 is separated from the interior surface of the pressure tube 1402 by an annular region 1406 that contains the light water. In an alternative embodiment, any other gaseous, liquid, or solid moderator may be used.

In the embodiment shown, the moderator in region 1406 may be stagnant and trapped within the fuel column 1400. However, in alternative embodiments, moderator in region 1406 actively or passively circulated within the column 1400, or flowing through the region 1406 and the column 1400.

The fuel insert 1404 is similar to that shown in FIG. 6. The insert 1404 includes a number of fuel tubes 1425 arranged within the annular region 1410 of the insert's tube 1408. The fuel insert's tube 1408 may be graphite, as discussed above or a multilayer construction of different materials.

In an embodiment, the interior insert retaining tube 1412 may be contiguous and forms a gas barrier between the cool coolant in the exterior flow region 1406 and the heated coolant flowing through the interior region 1410 of the insert. In an alternative embodiment, the outer tube 1408 of the fuel insert 1404 acts as the gas barrier.

One aspect of designing a power conversion cycle for the GPTR is the mismatch between the power cycle's peak pressure and the pressures of the GPTR. Peak pressures for CO₂ power cycles typically range from 3000-4000 psi (20.7-27.6 MPa). Increasing peak pressure in the power cycle generally improves cycle efficiency and increases compactness in the power generating system. However, increasing pressure in the GPTR fuel columns will increase the stored energy present, which will require larger amounts of structure to safely retain the pressure and also increase the expected rate of corrosion caused by the coolant. While it is not preferable to reduce the power cycle pressure, it is possible to modify the Brayton cycle and where the GPTR is incorporated into the cycle to achieve an efficient power cycle.

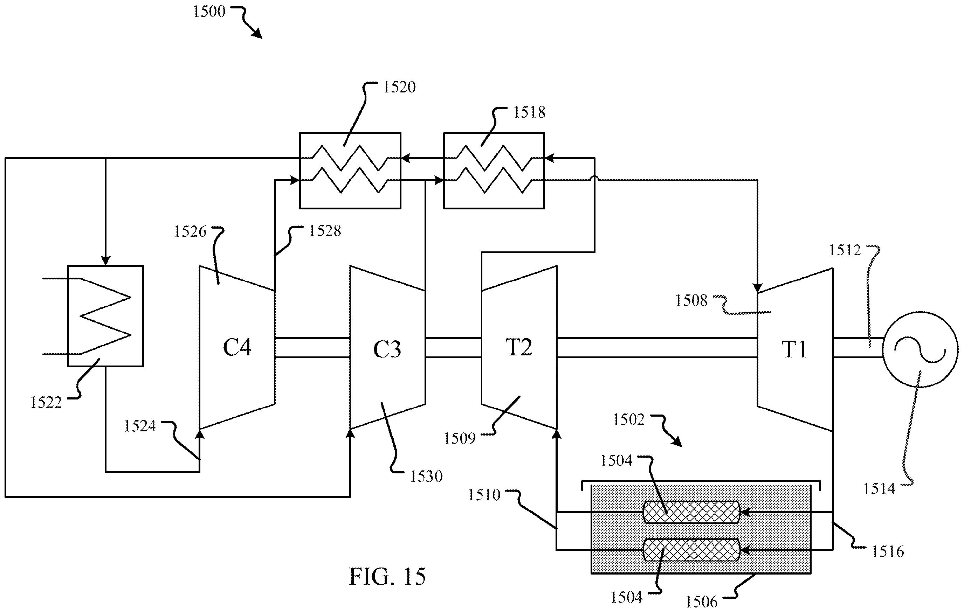

FIG. 15 illustrates a schematic of an embodiment of a split-expansion modified Brayton cycle incorporating a GPTR. In the embodiment shown, the pressure of the sCO₂ provided to the GPTR is reduced by employing "split expansion" by placing a pre-expansion turbine T1 1508 upstream of the GPTR 1502 in addition to the turbine T2 1509 following the GPTR 1502 (hence "split-expansion" in that the expansion turbines are separated by the GPTR). This allows the pressure of the coolant in the GPTR 1502 to be less than the maximum operating pressure of the cycle 1500.

In the split-expansion Brayton cycle 1500 shown, a turbine T1 1508 is provided before the GPTR 1502 and a second turbine T2 1509 is provided after the GPTR. The output of the second turbine 1509 is passed through a high-temperature recuperator 1518 and a low-temperature recuperator 1520 after which the coolant stream is split. The split streams are then passed to two different, independent recompression legs. The first leg further cools the stream using a cooler 1522 and the cooled stream 1524 is then passed to the first of two compressors 1526, a low-temperature compressor designated compressor C4. The compressed output 1528 is passed to the low-temperature recuperator 1520. The second leg is passed directly to the second compressor 1530, a high-temperature compressor designated C3. The output of the recompression legs is recombined at the inlet to the high temperature recuperator 1518 and then fed back into the first turbine T1 1508.

In the embodiment shown, the compressors and turbines are on the same shaft 1512. This, however, is optional as illustrated in FIGS. 14, 17, and 18 below. The shaft 1512 is also shown operating an electrical generator 1514 although any power recovery system may be used.

The GPTR 1502 may be of any configuration or embodiment described above. The GPTR 1502 is shown as including a calandria 1506 filled with a moderator and having some number, two are shown, of fuel columns 1504 containing nuclear fuel. The high-pressure turbine T1's outlet coolant stream 1516 is passed to the GPTR 1502 where it flows through the fuel columns 1504. A heated coolant stream 1510 exits the GPTR 1502 and is passed to the inlet of the low-pressure turbine T2, 1509.

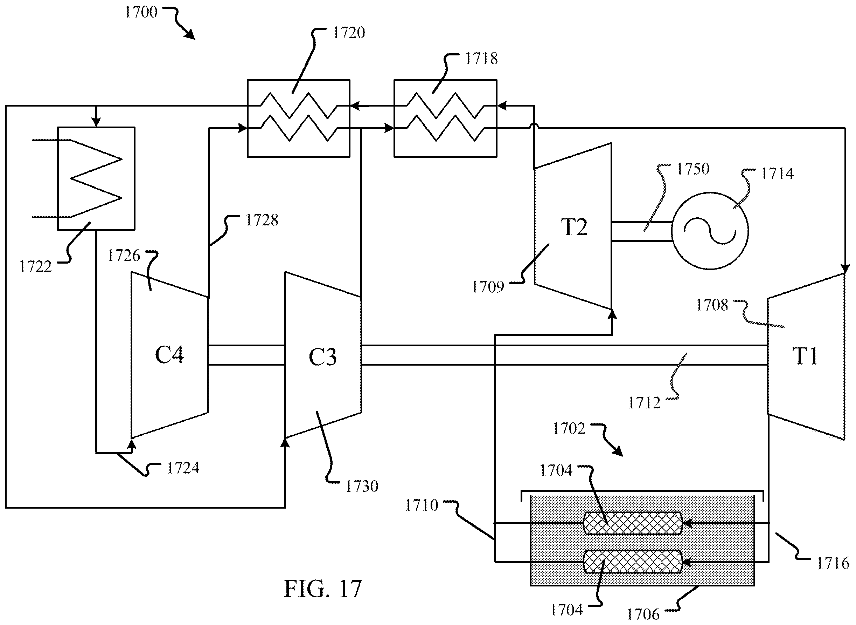

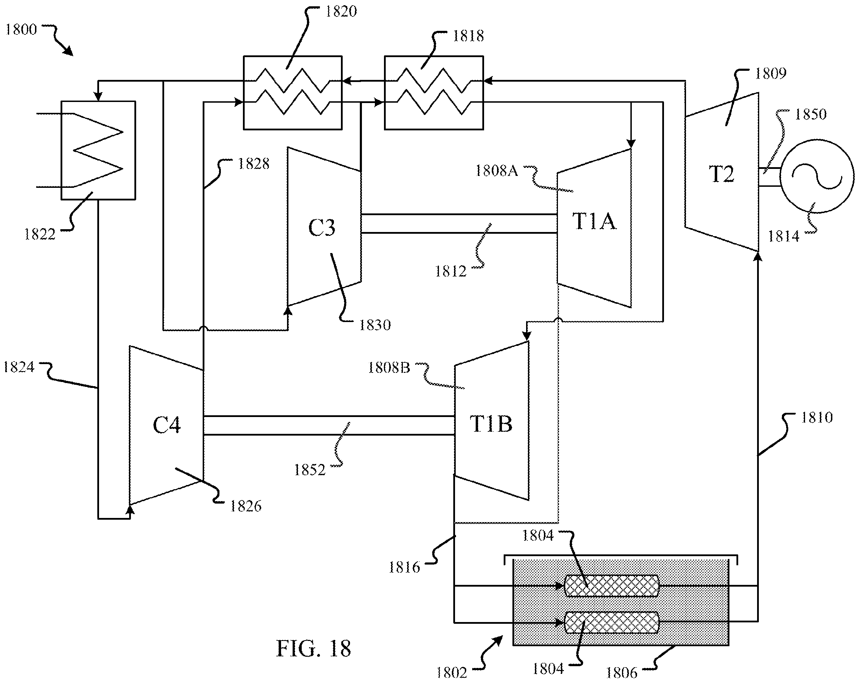

Note that a split-expansion embodiment of the simple recuperated Brayton cycle shown in FIG. 1 may also be used. In this embodiment, in addition to the single turbine 108 shown, a second turbine (similar to the turbine T2 1509 of FIG. 15) upstream of the GPTR 102 is provided. Again, similar to FIG. 15 the two turbines may be on the same shaft or, similar to FIGS. 17 and 18 below, the different turbines may be on different shafts one driving the compressor 126 and one driving the generator 114.

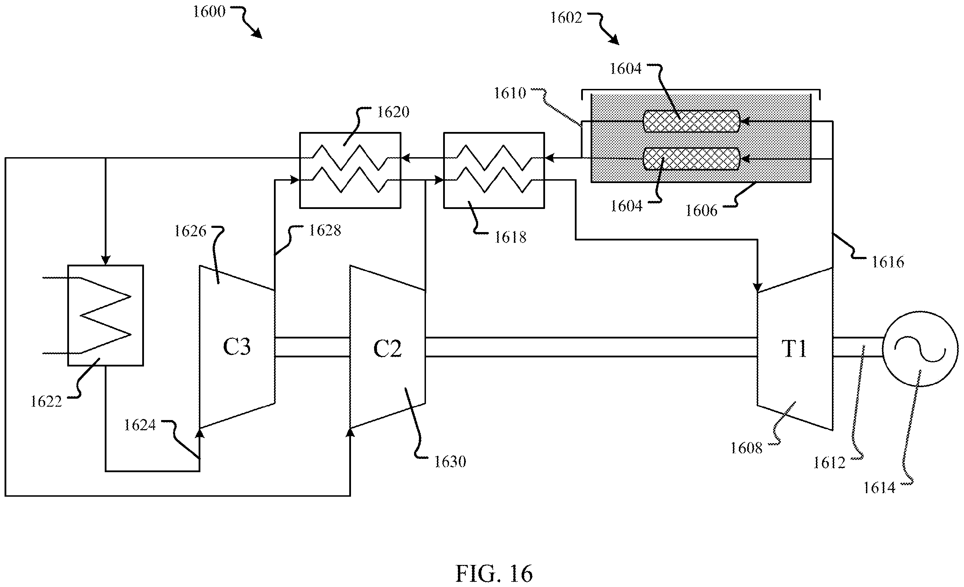

FIG. 16 illustrates yet another embodiment 1600 of a modified Brayton cycle, referred to herein as the pre-expansion modified Brayton cycle that incorporates a GPTR. In the embodiment shown, a sole turbine 1608 is placed ahead of the GPTR 1602 so that lower pressure sCO₂ is delivered to the GPTR 1602 for use as the primary coolant, but the pressure in the GPTR is low enough that there is no second turbine after coolant exits the GPTR. The single turbine T1 1608 drives the electric generator 1614 via the same shaft 1612 that drives the two compressors 1626, 1630.

In the embodiment shown, the heated sCO₂ from the GPTR 1602 is passed through two heat exchangers. The first, a high-temperature recuperator 1618, heats the pressurized sCO₂ prior to its delivery to the turbine 1608 and the second, a low-temperature recuperator 1620, which heats the output 1628 of one of the split streams. The sCO₂ stream, after passing through the second heat exchanger, is then split into two streams. The two streams are passed to different recompression legs (as described with reference to FIG. 15) one with a cooler 1622 that outputs a low-temperature coolant stream 1624 and one that is passed directly to the high-temperature compressor 1630. The output of the two recompression legs is ultimately recombined and passed to the first heat exchanger 1618 before going into the turbine 1608, again as described with reference to FIG. 15.

The GPTR 1602 may be of any configuration or embodiment described above. The GPTR 1602 is shown as including a calandria 1606 filled with a moderator and having some number, two are shown, of fuel columns 1604 containing nuclear fuel. The high-pressure turbine T1's outlet coolant stream 1616 is passed to the GPTR 1602 where it flows through the fuel columns 1604. A heated coolant stream 1610 exits the GPTR 1602 and is passed to the inlet of the low-pressure turbine T2, 1609.

FIG. 17 illustrates an alternative schematic of an embodiment of a split-expansion modified Brayton cycle incorporating a GPTR. In this embodiment, the cycle 1700 is designed such that one turbine (turbine T1 1708) produces enough power to drive the compressors and the other turbine powers the generator on separate shafts. This permits the turbine driving the compressors to be varied in speed, since it does not need to be synchronized to the generator's frequency.

In the split-expansion Brayton cycle 1700 shown, a turbine T1 1708 is provided before the GPTR 1702 and a second turbine T2 1709 is provided after the GPTR. The second turbine T2 1709 drives an electrical generator 1714 via a generator shaft 1750. While the shaft 1750 is shown operating an electrical generator 1714, any power recovery system may be used.

The first turbine T1 1708 drives the compressors 1730, 1726 by a second compressor shaft 1712. The output of the second turbine 1709 is passed through a high temperature recuperator 1718 and a low temperature recuperator 1720 after which the coolant stream is split. The split streams are then passed to two different, independent recompression legs. The first leg further cools the stream using a cooler 1722 and the cooled stream 1724 is then passed to the first of two compressors 1726, designated compressor C4. The compressed output 1728 is passed to the low temperature recuperator 1720. The second leg is passed directly to the second compressor 1730, designated C3. The output of the recompression legs are recombined at the inlet to the high temperature recuperator 1718 and then fed back into the first turbine T1 1708.

The GPTR 1702 may be of any configuration or embodiment described above. The GPTR 1702 is shown as including a calandria 1706 filled with a moderator and having some number, two are shown, of fuel columns 1704 containing nuclear fuel. The high-pressure turbine T1's outlet coolant stream 1716 is passed to the GPTR 1702 where it flows through the fuel columns 1704. A heated coolant stream 1710 exits the GPTR 1702 and is passed to the inlet of the low-pressure turbine T2, 1709.

FIG. 18 illustrates yet another alternative schematic of an embodiment of a split-expansion modified Brayton cycle incorporating a GPTR. In this embodiment, the cycle 1800 is designed such that two, independent high-pressure turbines 1808A, 1808B are provided on separate shafts, one for each compressor. This separates the two compressors and permits the turbines driving each compressor and the generator to be independently varied in speed, providing additional operational flexibility.

In the split-expansion Brayton cycle 1800 shown, the output low-temperature coolant from the high-temperature recuperator 1818 is split and passed to each of a first high-pressure turbine T1A 1808A and a second high-pressure turbine T1B 1808B. The output coolant streams from each of the high-pressure turbines 1808A and 1808B are combined into a GPTR inlet coolant stream 1816 and then passed to the GPTR 1802.

A low-pressure turbine T2 1809 is provided after the GPTR and receives the GPTR output heated coolant stream 1810. The low-pressure turbine T2 1809 drives an electrical generator 1814 via a generator shaft 1850. While the shaft 1850 is shown operating an electrical generator 1814, any power recovery system may be used.

The first high-pressure turbine T1A 1808A drives the high-temperature compressor 1830 by a second shaft 1812. The second high-pressure turbine T1B 1808B drives the low-temperature compressor 1816 by a third shaft 1852.

The output of the low-pressure turbine 1809 is passed through a high temperature recuperator 1818 and a low temperature recuperator 1820 after which the coolant stream is split. The split streams are then passed to two different, independent recompression legs. The first leg further cools the stream using a cooler 1822 and the cooled stream 1824 is then passed to the first of low-temperature compressor 1826, designated compressor C4. The compressed output 1828 is passed to the low-temperature recuperator 1820. The second recompression leg is passed directly to the high-temperature compressor 1830, designated C3. The output of the recompression legs are recombined at the inlet to the high-temperature recuperator 1818 and then fed back into the first and second high-temperature turbines 1808A, 1808B.

The GPTR 1802 may be of any configuration or embodiment described above. The GPTR 1802 is shown as including a calandria 1806 filled with a moderator and having some number, two are shown, of fuel columns 1804 containing nuclear fuel. The high-pressure turbines' combined outlet coolant streams 1816 are passed to the GPTR 1802 where it flows through the fuel columns 1804. A heated coolant stream 1810 exits the GPTR 1802 and is passed to the inlet of the low-pressure turbine T2, 1809.

In FIGS. 17 and 18 the "downstream" turbine drives a generator while the "upstream" turbine(s) drives the compressors. It should be noted that these turbines can be reversed, e.g. the upstream turbine can be the one driving the generator.

In the Brayton cycle embodiments of FIGS. 15, 16, 17 and 18 a depressurized sCO₂ stream output by a turbine is used by a GPTR as a coolant. The output of the GPTR is a heated sCO₂ stream, which is then ultimately repressurized by one or more compressors, which may be driven by the turbine, to create the pressurized sCO₂ stream that is the input to the turbine. The heat from the reactor is mostly recovered from the heated coolant during the repressurization resulting in a thermodynamic cycle whose input is the energy generated by the nuclear fission in the reactor and whose output is the mechanical energy from the turbine.

The split-expansion and pre-expansion approaches in FIGS. 15, 16, 17 and 18 can be applied to any type of gas cycle (sCO₂ or other), including the recompression cycle illustrated and also recuperated cycles, pre-compression cycles, partial cooling cycles, cycles with intercooling or reheating, and condensing CO₂ cycles.

## Claims

1. A nuclear power plant (100) comprising:
a reactor core (102) having a plurality of fuel columns (104) penetrating a calandria, the calandria (106) containing a volume of secondary coolant, each fuel column including a structural tube that forms the exterior of the fuel column, at least a portion of the exterior of the fuel column being in contact with the secondary coolant, the structural tube containing a nuclear fuel;
a closed-loop carbon dioxide coolant circuit that routes pressurized carbon dioxide (128) into the fuel columns and removes a heated carbon dioxide (110) from the fuel columns, thereby removing energy from the nuclear fuel within the fuel columns;
the closed-loop carbon dioxide coolant circuit including:
at least one turbine (108) configured to generate mechanical energy from the heated carbon dioxide and discharge depressurized carbon dioxide (116); and
at least one compressor (126) configured to compress the depressurized carbon dioxide and discharge pressurized carbon dioxide (128) to the reactor core,
**characterised in that**
the pressurized carbon dioxide is in a supercritical state throughout the closed-loop carbon dioxide coolant circuit.

2. The nuclear power plant of claim 1 wherein the secondary coolant is a moderating liquid.

3. The nuclear power plant of claim 2 wherein the secondary coolant is selected from light water, heavy water, liquid mixtures of ammonia, and organic fluids.

4. The nuclear power plant of claim 3 wherein the secondary coolant includes at least some heavy water.

5. The nuclear power plant of any one of the preceding claims further comprising:
one or more shields around the calandria.

6. The nuclear power plant of claim 5 wherein the shields contain water.

7. The nuclear power plant of any one of the preceding claims wherein each fuel column has a long axis, a first end, a second end opposite the first end, at least one fuel access port, at least one carbon dioxide inlet, and at least one carbon dioxide outlet.

8. The nuclear power plant of claim 7 wherein the carbon dioxide gas enters each fuel column at the first end via the carbon dioxide inlet and exits the fuel column from the second end via the carbon dioxide outlet.

9. The nuclear power plant of claim 7 wherein the carbon dioxide inlet and carbon dioxide outlet are at the first end and the carbon dioxide enters and is removed from the first end of the fuel columns.

10. The nuclear power plant of claim 7 wherein the nuclear fuel is inserted and removed through the fuel access port.

11. The nuclear power plant of claim 7 wherein each fuel column is provided with a fuel access port at the first end and a fuel access port at the second end and the nuclear fuel is inserted via the fuel access port at the first end and removed via the fuel access port at the second end.

12. The nuclear power plant of claim 7 further comprising:
at least one check valve preventing flow of pressurized carbon dioxide out of the fuel column via the carbon dioxide inlet or into the fuel column via the carbon dioxide outlet.

13. The nuclear power plant of any one of the preceding claims further comprising:
at least one pressure relief valve that allows flow of secondary coolant out of the calandria if a pressure of the secondary coolant exceeds a preselected pressure threshold, for example further comprising a reflood tank containing a moderating liquid configured to release the moderating liquid into the calandria when secondary coolant is flows out of the calandria via the pressure relief valve.

14. The nuclear power plant of any one of the preceding claims wherein the volume of secondary coolant in the calandria has sufficient heat removal capacity to prevent the temperature of the nuclear fuel in the fuel columns from rising above a threshold temperature during a loss of coolant event.

15. The nuclear power plant of any one of the preceding claims further comprising at least one of:
a cooling system configured to maintain the secondary coolant below a threshold temperature in the absence of flow or pressure in the carbon dioxide coolant circuit;
a containment vessel containing the calandria and the fuel columns.

## Patentansprüche

1. Kernkraftwerk (100), umfassend:
einen Reaktorkern (102) mit mehreren Brennstoffsäulen (104), die eine Calandria durchdringen, wobei die Calandria (106) ein Gefäß mit einem sekundären Kühlmittel enthält, wobei jede Brennstoffsäule ein Strukturrohr umfasst, welches das Äußere der Brennstoffsäule ausbildet, wobei zumindest ein Abschnitt des Äußeren der Brennstoffsäule das sekundäre Kühlmittel berührt, wobei das Strukturrohr einen Kernbrennstoff enthält;
einen geschlossenen Kohlenstoffdioxidkühlmittelkreislauf, der druckbeaufschlagtes Kohlenstoffdioxid (128) in die Brennstoffsäulen leitet und erwärmtes Kohlenstoffdioxid (110) aus den Brennstoffsäulen entnimmt, wobei Energie aus dem Kernbrennstoff innerhalb der Brennstoffsäulen entnommen wird;
wobei der geschlossene Kohlenstoffdioxidkühlmittelkreislauf Folgendes umfasst: mindestens eine Turbine (108), die dazu ausgelegt ist, aus dem erwärmten Kohlenstoffdioxid mechanische Energie zu erzeugen und druckloses Kohlenstoffdioxid (116) abzulassen; und
mindestens einen Verdichter (126), der dazu ausgelegt ist, das drucklose Kohlenstoffdioxid zu verdichten und das druckbeaufschlagte Kohlenstoffdioxid (128) zum Reaktorkern abzulassen,
**dadurch gekennzeichnet, dass** sich das druckbeaufschlagte Kohlenstoffdioxid im gesamten Kohlenstoffdioxidkühlmittelkreislauf in einem überkritischen Zustand befindet.

2. Kernkraftwerk nach Anspruch 1, wobei das sekundäre Kühlmittel eine Moderatorflüssigkeit ist.

3. Kernkraftwerk nach Anspruch 2, wobei das sekundäre Kühlmittel aus Leichtwasser, Schwerwasser, flüssigen Ammoniakgemischen und organischen Fluiden ausgewählt ist.

4. Kernkraftwerk nach Anspruch 3, wobei das sekundäre Kühlmittel zumindest etwas Schwerwasser enthält.

5. Kernkraftwerk nach einem der vorstehenden Ansprüche, ferner umfassend: eine oder mehrere Abschirmungen um die Calandria.

6. Kernkraftwerk nach Anspruch 5, wobei die Abschirmungen Wasser enthalten.

7. Kernkraftwerk nach einem der vorstehenden Ansprüche, wobei jede Brennstoffsäule eine Längsachse, ein erstes Ende, ein dem ersten Ende entgegengesetztes zweites Ende, mindestens einen Brennstoffzugangsstutzen, mindestens einen Kohlenstoffdioxideinlass und mindestens einen Kohlenstoffdioxidauslass aufweist.

8. Kernkraftwerk nach Anspruch 7, wobei das Kohlenstoffdioxidgas am ersten Ende über den Kohlenstoffdioxideinlass in jede Brennstoffsäule eintritt und am zweiten Ende über den Kohlenstoffdioxidauslass aus der Brennstoffsäule austritt.

9. Kernkraftwerk nach Anspruch 7, wobei der Kohlenstoffdioxideinlass und der Kohlenstoffdioxidauslass am ersten Ende angeordnet sind und das Kohlenstoffdioxid am ersten Ende der Brennstoffsäulen eintritt und daraus entnommen wird.

10. Kernkraftwerk nach Anspruch 7, wobei der Kernbrennstoff durch den Brennstoffzugangsstutzen eingespeist und entnommen wird.

11. Kernkraftwerk nach Anspruch 7, wobei jede Brennstoffsäule mit einem Brennstoffzugangsstutzen am ersten Ende und einem Brennstoffzugangsstutzen am zweiten Ende versehen ist und der Kernbrennstoff über den Brennstoffzugangsstutzen am ersten Ende eingespeist und über den Brennstoffzugangsstutzen am zweiten Ende entnommen wird.

12. Kernkraftwerk nach Anspruch 7, ferner Folgendes umfassend:
mindestens ein Rückschlagventil, das die Strömung von druckbeaufschlagtem Kohlenstoffdioxid über den Kohlenstoffdioxideinlass aus der Brennstoffsäule heraus oder über den Kohlenstoffdioxidauslass in die Brennstoffsäule hinein verhindert.

13. Kernkraftwerk nach einem der vorstehenden Ansprüche, ferner Folgendes umfassend:
mindestens ein Überdruckventil, das die Strömung eines sekundären Kühlmittels aus der Calandria heraus zulässt, wenn der Druck des sekundären Kühlmittels einen festgelegten Druckschwellenwert übersteigt, zum Beispiel ferner umfassend einen Wiederflutungstank, der eine Moderatorflüssigkeit enthält, der dazu ausgelegt ist, die Moderatorflüssigkeit in die Calandria freizugeben, wenn das sekundäre Kühlmittel über das Überdruckventil aus der Calandria herausfließt.

14. Kernkraftwerk nach einem der vorstehenden Ansprüche, wobei das Gefäß mit sekundärem Kühlmittel in der Calandria eine ausreichende Wärmeableitungskapazität aufweist, um zu verhindern, dass die Temperatur des Kernbrennstoffs in den Brennstoffsäulen während eines Kühlmittelverlustereignisses über einen Temperaturschwellenwert ansteigt.

15. Kernkraftwerk nach einem der vorstehenden Ansprüche, ferner mindestens eines der folgenden Elemente umfassend:
ein Kühlsystem, das dazu ausgelegt ist, das sekundäre Kühlmittel in Abwesenheit einer Strömung oder eines Drucks im Kohlenstoffdioxidkühlmittelkreislauf unter einem Temperaturschwellenwert zu halten;
einen Sicherheitsbehälter, der die Calandria und die Brennstoffsäulen enthält.

## Revendications

1. Centrale nucléaire (100) comprenant :
un noyau de réacteur (102) ayant une pluralité de colonnes combustibles (104) pénétrant dans une cuve, la cuve (106) contenant un volume de réfrigérant secondaire, chaque colonne combustible comprenant un tube structural qui forme l'extérieur de la colonne combustible, au moins une partie de l'extérieur de la colonne combustible étant en contact avec le réfrigérant secondaire, le tube structural contenant un combustible nucléaire ;
un circuit de dioxyde de carbone réfrigérant en boucle fermée qui achemine du dioxyde de carbone sous pression (128) dans les colonnes combustibles et supprime un dioxyde de carbone chauffé (110) des colonnes combustibles, ce qui permet de supprimer l'énergie du combustible nucléaire à l'intérieur des colonnes combustibles ;
le circuit de dioxyde de carbone réfrigérant en boucle fermée comprenant :
au moins une turbine (108) conçue pour générer une énergie mécanique à partir du dioxyde de carbone chauffé et évacuer le dioxyde de carbone dépressurisé (116) ; et au moins un compresseur (126) conçu pour comprimer le dioxyde de carbone dépressurisé et évacuer le dioxyde de carbone sous pression (128) vers le noyau de réacteur, **caractérisé en ce que** le dioxyde de carbone sous pression est dans un état supercritique dans tout le circuit de dioxyde de carbone réfrigérant en boucle fermée.

2. Centrale nucléaire selon la revendication 1, dans laquelle le réfrigérant secondaire est un liquide de modération.

3. Centrale nucléaire selon la revendication 2, dans laquelle le réfrigérant secondaire est sélectionné parmi l'eau légère, l'eau lourde, des mélanges liquides d'ammoniac et des fluides organiques.

4. Centrale nucléaire selon la revendication 3, dans laquelle le réfrigérant secondaire comprend au moins une quantité d'eau lourde.

5. Centrale nucléaire selon l'une quelconque des revendications précédentes, comprenant en outre : un ou plusieurs blindages autour de la cuve.

6. Centrale nucléaire selon la revendication 5, dans laquelle les blindages contiennent de l'eau.

7. Centrale nucléaire selon l'une quelconque des revendications précédentes, dans laquelle chaque colonne combustible possède un axe long, une première extrémité, une seconde extrémité opposée à la première extrémité, au moins un orifice d'accès de combustible, au moins une entrée de dioxyde de carbone, et au moins une sortie de dioxyde de carbone.

8. Centrale nucléaire selon la revendication 7, dans laquelle le dioxyde de carbone gazeux entre dans chaque colonne combustible à la première extrémité par l'entrée de dioxyde de carbone et sort de la colonne combustible depuis la seconde extrémité par la sortie de dioxyde de carbone.

9. Centrale nucléaire selon la revendication 7, dans laquelle l'entrée de dioxyde de carbone et la sortie de dioxyde de carbone se trouvent à la première extrémité et le dioxyde de carbone entre dans et est supprimé de la première extrémité des colonnes combustibles.

10. Centrale nucléaire selon la revendication 7, dans laquelle le combustible nucléaire est inséré et supprimé par l'intermédiaire de l'orifice d'accès de combustible.

11. Centrale nucléaire selon la revendication 7, dans laquelle chaque colonne combustible est pourvue d'un orifice d'accès de combustible à la première extrémité et d'un orifice d'accès de combustible à la seconde extrémité et le combustible nucléaire est inséré par l'orifice d'accès de combustible à la première extrémité et supprimé par l'orifice d'accès de combustible à la seconde extrémité.

12. Centrale nucléaire selon la revendication 7, comprenant en outre :
au moins un clapet anti-retour empêchant l'écoulement de dioxyde de carbone sous pression de sortir de la colonne combustible par l'entrée de dioxyde de carbone ou d'entrer dans la colonne combustible par la sortie de dioxyde de carbone.

13. Centrale nucléaire selon l'une quelconque des revendications précédentes, comprenant en outre :
au moins une vanne de détente qui permet l'écoulement de réfrigérant secondaire hors de la cuve si une pression du réfrigérant secondaire dépasse un seuil de pression présélectionné, par exemple comprenant en outre un réservoir de renflouement contenant un liquide de modération conçu pour libérer le liquide de modération dans la cuve lorsque le réfrigérant secondaire s'écoule hors de la cuve par la vanne de détente.

14. Centrale nucléaire selon l'une quelconque des revendications précédentes, dans laquelle le volume de réfrigérant secondaire dans la cuve présente une capacité de suppression de chaleur suffisante pour empêcher la température du combustible nucléaire dans les colonnes combustibles de s'élever au-dessus d'une température seuil pendant un événement de perte de réfrigérant.

15. Centrale nucléaire selon l'une quelconque des revendications précédentes, comprenant en outre :
un système de refroidissement conçu pour maintenir le réfrigérant secondaire sous une température seuil en l'absence d'écoulement ou de pression dans le circuit de dioxyde de carbone réfrigérant ; et/ou
une cuve de confinement contenant la cuve et les colonnes combustibles.
